(19) Europäisches Patentamt / European Patent Office / Office européen des brevets

(11) **EP 4 124 041 A1**

(12) **EUROPEAN PATENT APPLICATION**
published in accordance with Art. 153(4) EPC

(43) Date of publication:
**25.01.2023 Bulletin 2023/04**

(21) Application number: **21771575.4**

(22) Date of filing: **15.03.2021**

(51) International Patent Classification (IPC):
$H04N\ 19/597$ (2014.01)   $H04N\ 19/70$ (2014.01)
$H04N\ 19/136$ (2014.01)   $H04N\ 19/60$ (2014.01)
$H04N\ 9/31$ (2006.01)

(52) Cooperative Patent Classification (CPC):
H04N 19/167; H04N 19/184; H04N 19/186;
H04N 19/597

(86) International application number:
**PCT/KR2021/003175**

(87) International publication number:
**WO 2021/187839 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2020 KR 20200032156**
**22.06.2020 US 202063042549 P**

(71) Applicant: **LG Electronics, Inc.**
**Yeongdeungpo-gu**
**Seoul 07336 (KR)**

(72) Inventors:
• **OH, Hyunmook**
  **Seoul 06772 (KR)**
• **OH, Sejin**
  **Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **POINT CLOUD DATA TRANSMISSION DEVICE, TRANSMISSION METHOD, PROCESSING DEVICE, AND PROCESSING METHOD**

(57)    Disclosed herein are a point cloud data transmission method including encoding point cloud data, and transmitting a bitstream containing the point cloud data, and a point cloud data processing method including receiving a bitstream containing point cloud data, and decoding the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, in some embodiments, a method of transmitting point cloud data may include encoding point cloud data including geometry and attributes and transmitting a bitstream containing the encoded point cloud data. The geometry may information indicating positions of points of the point cloud data, and the attributes may include at least one of a color and reflectance of the points. The encoding of the point cloud data may include transforming coordinates representing the positions of the points.
In some embodiments, an apparatus of transmitting point cloud data may include an encoder configured to encode point cloud data including geometry and attributes and transmitting a bitstream containing the encoded point cloud data. The geometry may information indicating positions of points of the point cloud data, and the attributes may include at least one of a color and reflectance of the points. The encoder of the point cloud data may transforms coordinates representing the positions of the points.
In some embodiments, a method of processing point cloud data may include receiving a bitstream containing point cloud data and decoding the point cloud data. The bitstream may contain signaling information. The point cloud data may include geometry and attributes. The geometry may be information indicating positions of points in the point cloud data, and the attributes may include at least one of a color and reflectance of the points. The decoding of the point cloud data may include transforming coordinates representing the positions of the points based on the signaling information.
In some embodiments, a device for processing point cloud data may include a receiver configured to receive a bitstream containing point cloud data and a decoder configured to decode the point cloud data. The bitstream may contain signaling information. The point cloud data may include geometry and attributes. The geometry may be information indicating positions of points in the point cloud data, and the attributes may include at least one of a color and reflectance of the points. The decoder may transform coordinates representing the positions of the points based on the signaling information.

[Advantageous Effects]

An apparatus and a method in accordance with some embodiments may process point cloud data with high efficiency.
An apparatus and a method in accordance with some embodiments may provide a point cloud service with high qualtiry.
An apparatus and a method in accordance with some embodiments may provide a point cloud content for a universal service including VR service, automative driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;
FIG. 11 illustrates a point cloud decoder according to embodiments;
FIG. 12 illustrates a transmission device according to embodiments;
FIG. 13 illustrates a reception device according to embodiments;
FIG. 14 illustrates an exemplary structure operable in connection with point cloud data transmission/reception methods/devices according to embodiments;
FIG. 15 is a flowchart illustrating an operation of a point cloud data transmission device according to embodiments;
FIG. 16 illustrates an example of the operation of the point cloud data transmission device;
FIG. 17 illustrates an example of a processing process of the point cloud transmission device;
FIG. 18 illustrates an example of coordinate transformation;
FIG. 19 illustrates an example of a coordinate system;
FIG. 20 illustrates an example of coordinate transformation;
FIG. 21 illustrates an example of coordinate projection;
FIG. 22 illustrates an example of laser position adjustment;
FIG. 23 illustrates an example of voxelization;
FIG. 24 shows an example of a syntax structure of signaling information related to projection;
FIG. 25 shows an example of signaling information according to embodiments;
FIG. 26 shows an example of signaling information according to embodiments;
FIG. 27 shows an example of signaling information according to embodiments;
FIG. 28 is signaling information according to embodiments;
FIG. 29 is a flowchart illustrating an operation of a point cloud data reception device according to embodiments;
FIG. 30 illustrates an example of the operation of the point cloud reception device;
FIG. 31 illustrates an example of a processing procedure of the point cloud reception device;
FIG. 32 illustrates an example of inverse projection;
FIG. 33 illustrates an example of a processing procedure of the point cloud reception device according to embodiments;
FIG. 34 is a flow diagram illustrating a method of transmitting point cloud data according to embodiments; and
FIG. 35 is a flow diagram illustrating a method of processing point cloud data according to embodiments.

[Best Model

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.
Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

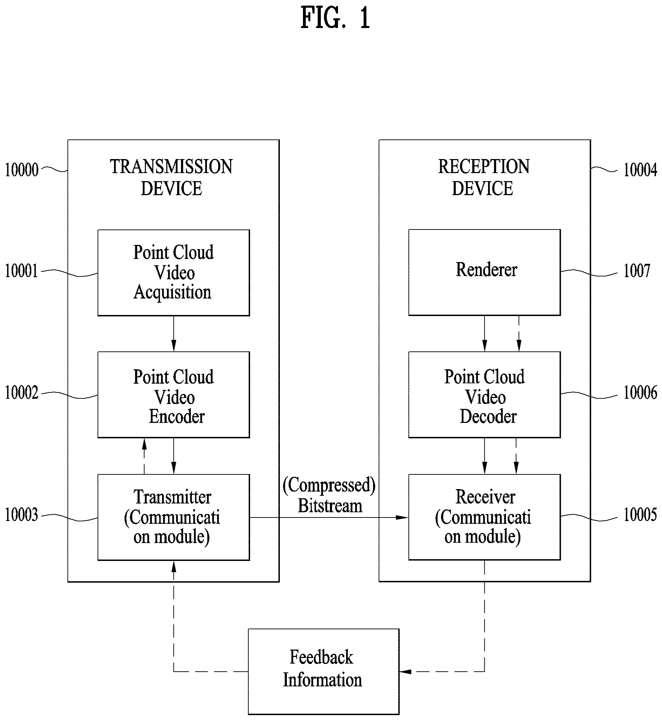

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

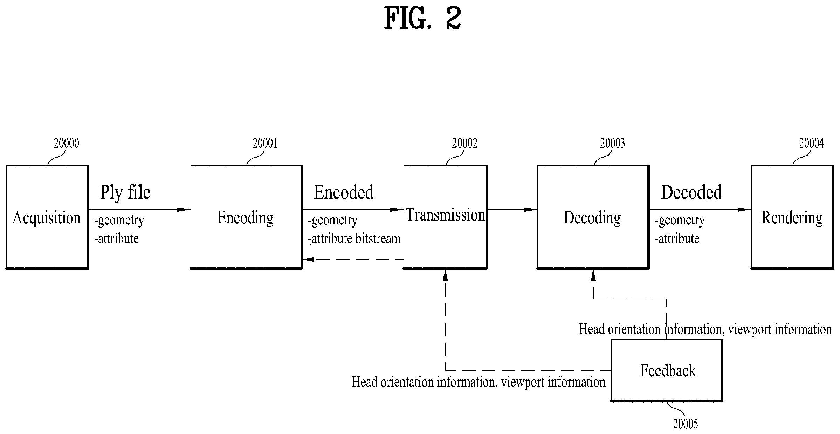

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquirer 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

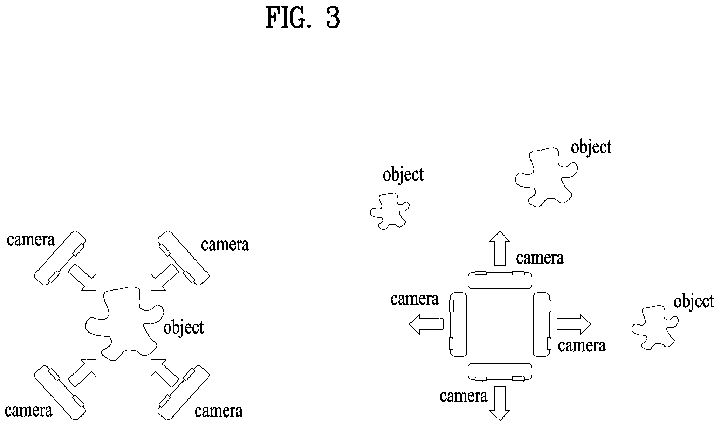

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

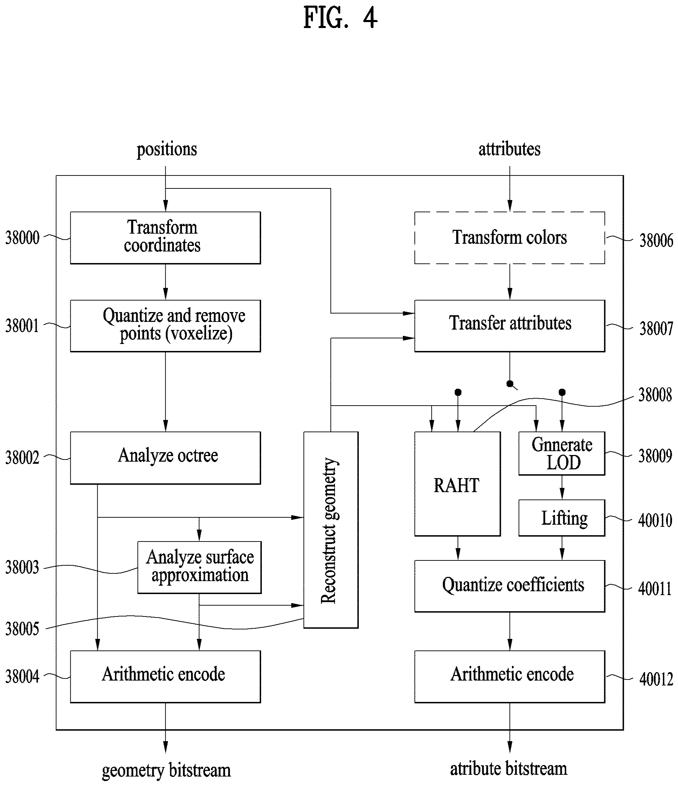

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

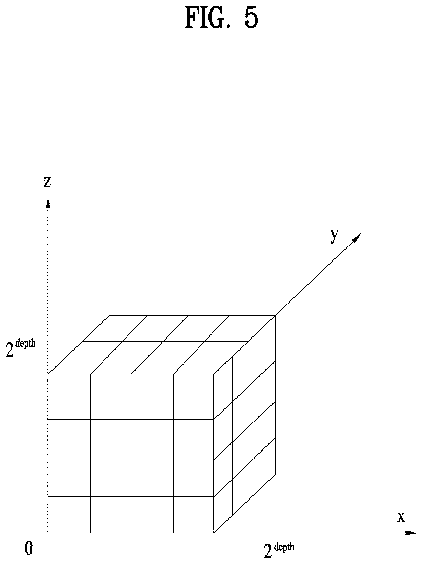

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

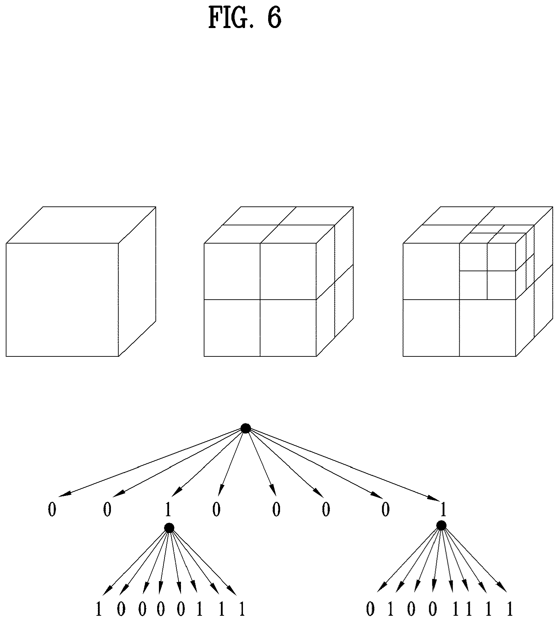

FIG. 6 shows an example of an octree and occupancy code according to embodiments.

As described with reference to FIGS. 1 to 4, the point cloud content providing system (point cloud video encoder 10002) or the point cloud encoder (for example, the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$\mathrm{d} = Ceil\left(Log2\left(Max\left(x_n^{int}, y_n^{int}, z_n^{int}, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (for example, the arithmetic encoder 40004) according to the embodiments may perform entropy encoding on the occupancy codes. In order to increase the compression efficiency, the point cloud encoder may perform intra/inter-coding on the occupancy codes. The reception device (for example, the reception device 10004 or the point cloud video decoder 10006) according to the embodiments reconstructs the octree based on the occupancy codes.

The point cloud encoder (for example, the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta x$, $\Delta y$, $\Delta z$) of the edge, and the vertex position value (relative position value within the edge). When the trisoup geometry encoding is applied, the point cloud encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} - \frac{1}{n}\sum_{i=1}^{n} \begin{bmatrix} x_i \\ y_i \\ z_i \end{bmatrix}; \text{ ii) } \begin{bmatrix} x_i \\ y_i \\ \bar{z}_i \end{bmatrix} - \begin{bmatrix} x_i \\ y_i \\ z_i \end{bmatrix} - \begin{bmatrix} \mu_x \\ \mu_y \\ u_z \end{bmatrix}; \text{ iii) } \begin{bmatrix} \sigma_x^2 \\ \sigma_y^2 \\ \sigma_z^2 \end{bmatrix} - \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 2-1 Triangles formed from vertices ordered 1,…,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

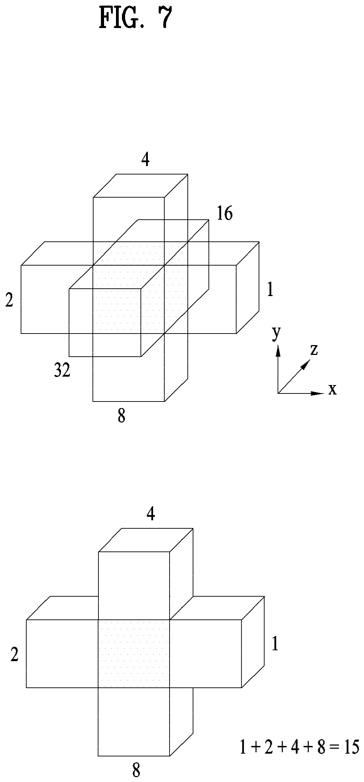

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (for example, the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using 23 = 8 methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The left part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The right part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

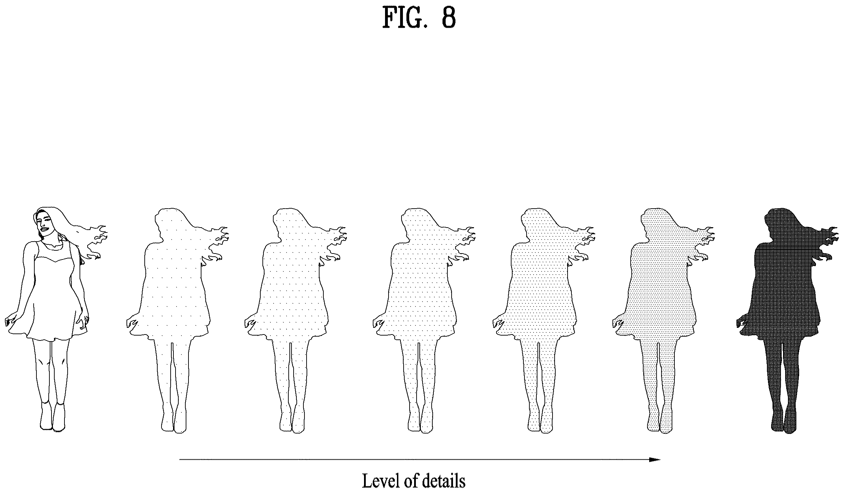

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

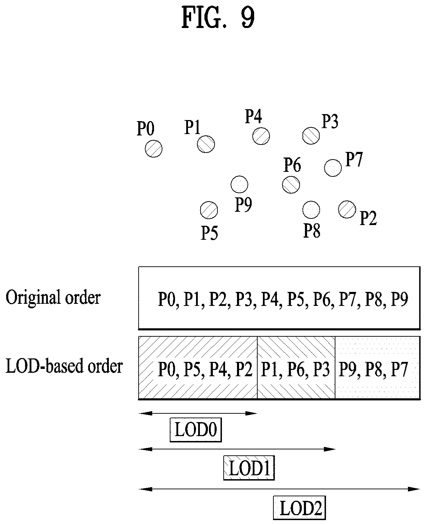

FIG. 9 illustrates an example of point configuration for each LOD according to embodiments.

As described with reference to FIGS. 1 to 8, the point cloud content providing system, or the point cloud encoder (for example, the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (for example, the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE Attribute prediction residuals inverse quantization pseudo code

```
int PCCInverseQuantization(int value, int quantStep) {
    if( quantStep ==0) {
    return value;
    } else {
    return value * quantStep;
    }
    }
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (for example, the arithmetic encoder 40012) may perform entropy coding on the attributes of the corresponding point without performing the above-described operation.

The point cloud encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level $g_{l_{x,y,z}}$ may be calculated based on $g_{l+1\,2x,y,z}$ and $g_{l+1\,2x+1,y,z}$. The weights for $g_{l_{2x,y,z}}$ and $g_{l_{2x+1,y,z}}$ are $w1 = w_{l_{2x,y,z}}$ and $w2 = w_{l_{2x+1,y,z}}$.

$$\begin{bmatrix} g_{l-1\,x,y,z} \\ h_{l-1\,x,y,z} \end{bmatrix} - T_{w1\,w2} \begin{bmatrix} g_{l\,2x,y,z} \\ g_{l\,2x+1,y,z} \end{bmatrix}, \quad T_{w1\,w2} - \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 400012). The weights are calculated as $w_{l-1_{x,y,z}} = w_{l\,2,x,y,z} + w_{l\,2x+1,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} - T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

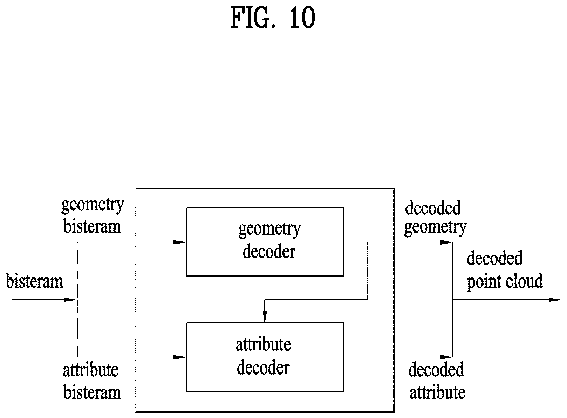

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

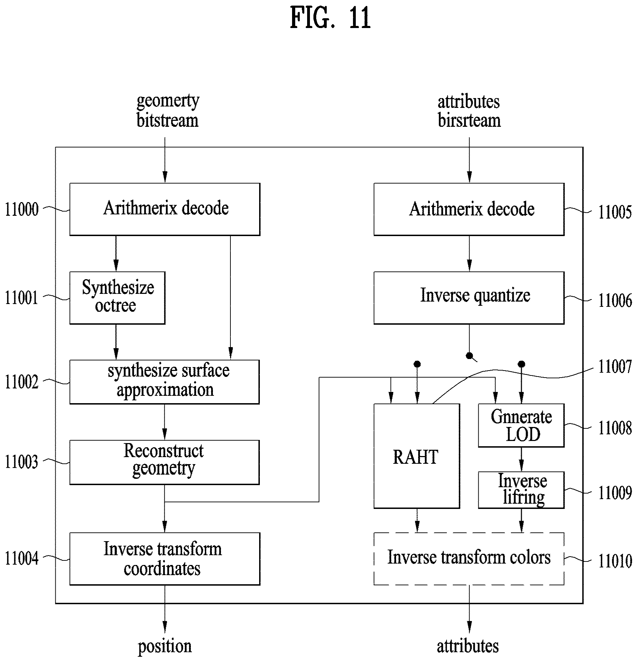

FIG. 11 illustrates a point cloud decoder according to embodiments.

The point cloud decoder illustrated in FIG. 11 is an example of the point cloud decoder illustrated in FIG. 10, and may perform a decoding operation, which is an inverse process of the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

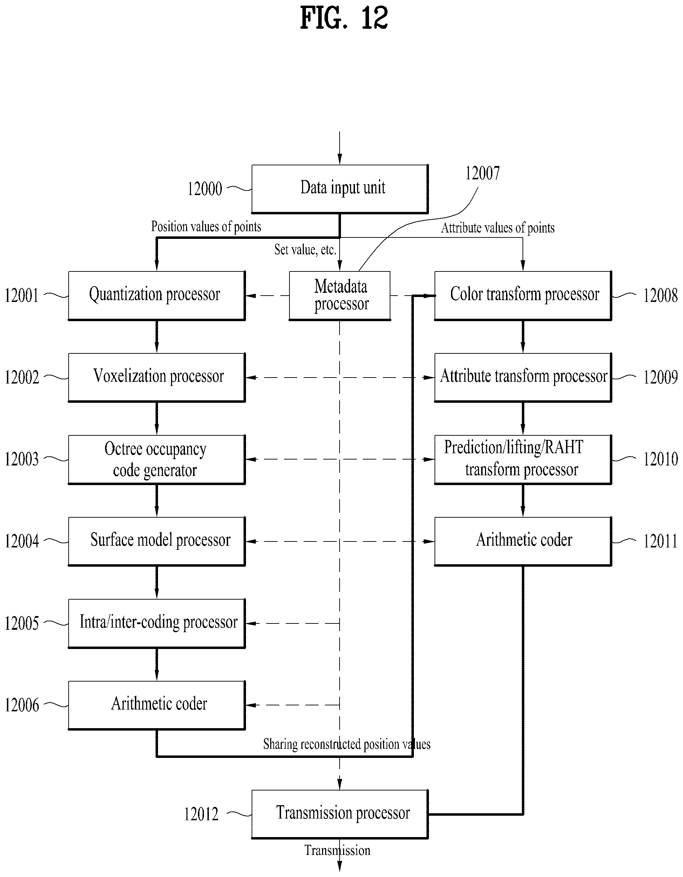

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trigsoup geometry encoding based on a surface model to reconstruct the positions of points in a specific region (or node) on a voxel basis. The surface model processor 12004 may perform an operation and/or method the same as or similar to the operation and/or method of the point cloud encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom0$^0$ and one or more attribute bitstreams Attr0$^0$ and Attr1$^0$.

A slice refers to a series of syntax elements representing the entirety or part of a coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

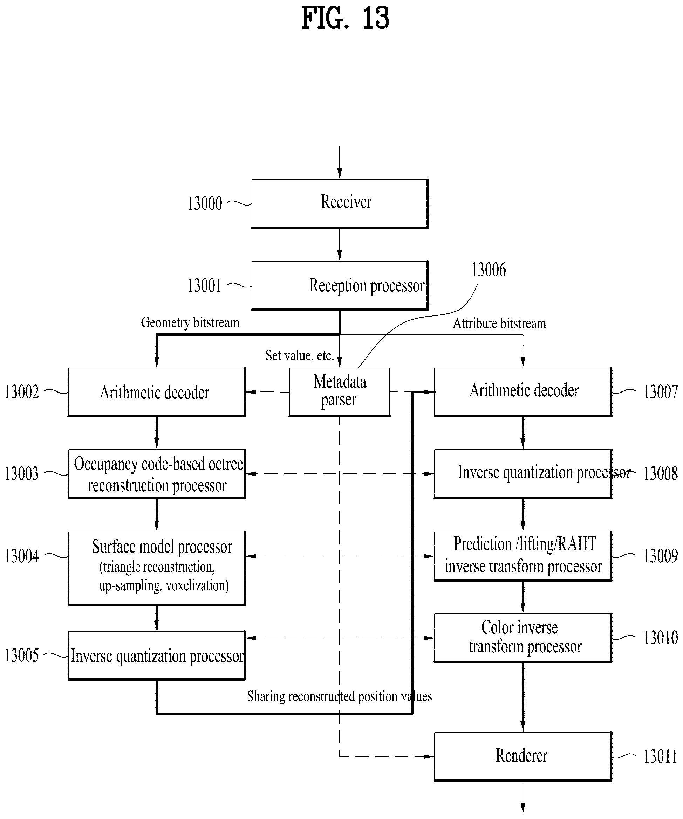

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

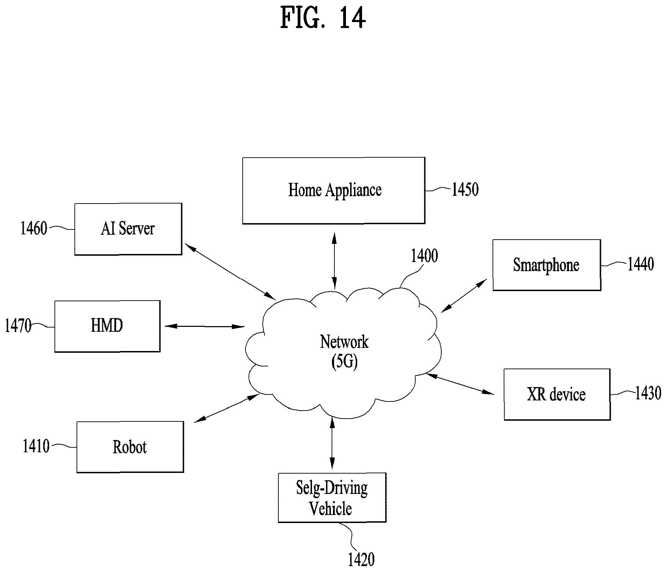

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

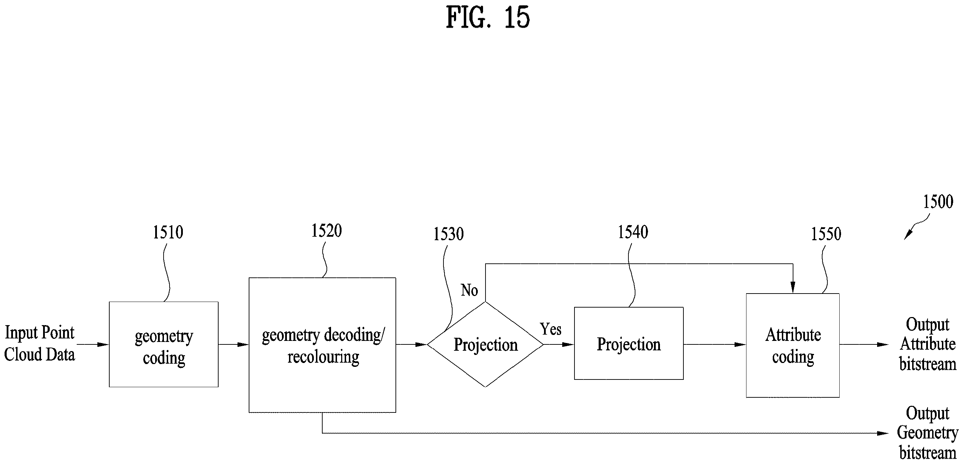

FIG. 15 is a flowchart illustrating an operation of a point cloud data transmission device according to embodiments.

The flowchart 1500 of FIG. 15 shows an example of an operation of a point cloud transmission device (or referred to as a point cloud data transmission device) that performs projection in order to increase the compression efficiency of attribute encoding. Projection according to the embodiments is applied to geometry in a pre-processing process of attribute encoding. Point cloud data (e.g., LiDAR data, etc.) acquired in a certain pattern has a different density of data distribution according to the acquisition pattern. As described with reference to FIGS. 1 to 14, attribute encoding is performed based on geometry encoding. When attributes are encoded based on non-uniformly distributed geometry, attribute compression efficiency may be degraded. Therefore, the projection according to the embodiments is applied to point cloud data that may increase attribute compression efficiency through position change. The projection means to transform a coordinate system representing the position (geometry) of each point (e.g., a Cartesian coordinate system composed of x-axis, y-axis, and z-axis) and transform the transformed coordinate system to a coordinate system representing a compressible form (e.g., a space in the form of a square column). The projection may be referred to as coordinate transformation.

As described with reference to FIGS. 1 to 14, the point cloud transmission device (e.g., the transmission device of FIG. 1, the point cloud encoder of FIG. 4, and the transmission device of FIG. 12) performs coding (geometry coding) on the geometry (1510). The geometry coding according to the embodiments corresponds to a combination of at least one of the operations of the coordinate transformer 40000, the quantization 40001, the octree analyzer 40002, the surface approximation analyzer 40003, the arithmetic encoder 40004, and the geometric reconstructor (reconstruct geometry) 40005 described with reference to FIG. 4, and is not limited to the above example. In addition, the geometry coding according to the embodiments corresponds to a combination of at least one of the data input unit 12000, the quantization processor 12001, the voxelization processor 12002, the octree occupancy code generator 12003, the surface model processor 12004, the intra/inter-coding processor 12005, the arithmetic coder 12006, and the metadata processor 12007 described with reference to FIG. 12, and is not limited to the above example. The geometry coding may be referred to as geometry encoding.

When lossy coding is performed, the point cloud transmission device according to the embodiments decodes the encoded geometry and performs recoloring (attribute transfer) (1520). The point cloud transmission device may minimize attribute distortion by matching the reconstructed geometry with attributes. The point cloud transmission device may determine whether to perform projection on the reconstructed geometry (1530) and perform projection (1540).

The point cloud transmission device according to the embodiments performs attribute coding based on the projected geometry (1550). The attribute coding according to the embodiments corresponds to a combination of at least one of the operations of the color transformer 40006, the attribute transformer 40007, the RAHT transformer 40008, the LOD generator 40009, the lifting transformer 40010, the coefficient quantizer 40011, and/or the arithmetic encoder 40012 described with reference to FIG. 4, and is not limited to the above example. In addition, the attribute coding according to the embodiments corresponds to a combination of at least one of the operations of the color transform processor 12008, the attribute transform processor 12009, the prediction/lifting/RAHT transform processor 12010, and the arithmetic coder 12011 described with reference to FIG. 12, and is not limited to the above example. The attribute coding may be referred to as attribute encoding. The point cloud transmission device performs attribute coding and outputs an attribute bitstream.

The geometry coding and attribute coding according to the embodiments are the same as those described with reference to FIGS. 1 to 14, and thus detailed description thereof will be omitted.

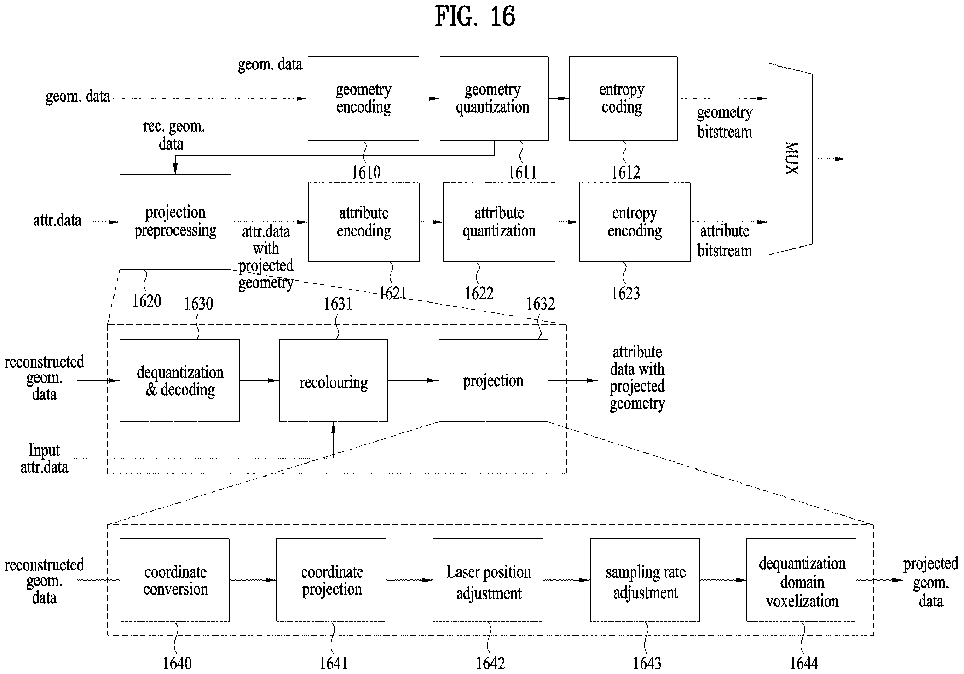

FIG. 16 illustrates an example of the operation of the point cloud data transmission device.

The flowchart 1600 of FIG. 16 illustrates details of the operation of the point cloud data transmission device (or point cloud transmission device) of the flowchart 1500 of FIG. 15. The flowchart 1600 shows an example of the operation of the point cloud transmission device. Therefore, the data processing sequence of the point cloud transmission device is not limited to this example. In addition, the operations represented by the elements of the flowchart 1600 according to the embodiments may be performed by hardware, software, and/or a process that constitutes the point cloud transmission device, or a combination thereof.

The point cloud transmission device performs geometry coding (e.g., the geometry coding 1510 described with reference to FIG. 15) on geometry data and outputs a geometry bitstream. The geometry coding according to the embodiments may include geometry encoding 1610, geometry quantization 1611, and entropy coding 1612. The geometry encoding 1610 according to the embodiments may include at least one of octree geometry encoding, trisoup geometry encoding, or predictive geometry coding, but is not limited thereto. The geometry encoding is the same as that described with reference to FIG. 4, and thus a description thereof will be omitted.

The point cloud transmission device performs projection preprocessing (e.g., the projection described with reference to FIG. 15) based on the reconstructed geometry data (1620). The point cloud transmission device may perform projection preprocessing and output projected geometry and attributes. The projection preprocessing 1620 according to the embodiments may include dequantization & decoding 1630 for the reconstructed geometry, recoloring 1631 for matching the decoded geometry and attributes, and projection 1632.

The point cloud transmission device according to the embodiments performs inverse quantization and decoding on the reconstructed geometry (1630). The point cloud transmission device performs recoloring to match the decoded geometry and attribute data (1631). The point cloud transmission device performs projection on the recolored point cloud data (e.g., geometry and attributes) (1632).

The projection 1632 according to the embodiments may include at least one of coordinate transformation 1640, coordinate projection 1641, laser position adjustment 1642, sampling rate adjustment 1643, or projection domain voxelization 1644. Geometry represents the positions of points, and the position of each point is expressed in a coordinate system (for example, a 2/3-dimensional Cartesian coordinate system, a 2/3-dimensional cylindrical coordinate system, a spherical coordinate system, etc.). In order to express the position of each point indicated by the input geometry as a position in 3D space, the point cloud transmission device according to the embodiments selects a coordinate system and performs coordinate transformation 1640 of transforming the geometry into information (for example, a vector value) in the selected coordinate system. For example, the point cloud transmission device may perform coordinate transformation including Cartesian-cylindrical coordinate transformation of transforming the Cartesian coordinate system into a cylindrical coordinate system, and Cartesian-spherical coordinate transformation of transforming the Cartesian coordinate system into a spherical coordinate system. The coordinate system and coordinate transformation according to the embodiments are not limited to the above-described examples. The point cloud transmission device according to the embodiments performs the coordinate projection 1641 of projecting a geometry expressed in a transformed coordinate system into a compressible form (e.g., a square column space).

The point cloud transmission device performs the laser position adjustment 1642 and/or the sampling rate adjustment 1643 to correct the projection in order to increase the accuracy of the projection. The laser position adjustment 1642 and the sampling rate adjustment 1643 are projection correction processing processes may be selectively performed according to the characteristics of the point cloud data and the characteristics of the point cloud data acquisition device, may be performed simultaneously, may all be performed sequentially, or may all be skipped. As described above, the accuracy of the projection may be degraded depending on the density of point cloud data (e.g., LiDAR data, etc.), which is acquired in a predetermined pattern when the projection is performed. The point cloud transmission device performs the laser position adjustment 1642 to correct the projected point cloud data (e.g. projected geometry) in consideration of the position of the point cloud data acquisition device (e.g., laser). The point cloud transmission device performs the sampling rate adjustment 1643 to correct the projected point cloud data (e.g., projected geometry) by applying a scale factor based on the mechanical properties of the point cloud data acquisition device.

The point cloud transmission device performs the voxelization 1644 of transforming the projected geometry into a domain that is efficient for compression. The projected geometry is transformed into position information in integer units for compression through the voxelization 1644.

The point cloud transmission device performs attribute coding (e.g., the attribute coding 1550 described with reference to FIG. 15) based on the projected geometry and outputs an attribute bitstream. The attribute coding according to the embodiments includes attribute encoding 1621, attribute quantization 1622, and entropy coding 1623. The attribute coding may be referred to as attribute encoding. The attribute encoding 1621 according to the embodiments corresponds to at least one of RAHT coding, predictive transform coding, or lifting transform coding, or a combination of one or more of the coding schemes according to point cloud content. For example, the RAHT coding and lifting transform coding may be used for lossy coding that compresses point cloud content data to a significant degree. The predictive transform coding may be used for lossless coding.

As shown in the figure, the output geometry bitstream and attribute bitstream are multiplexed and transmitted.

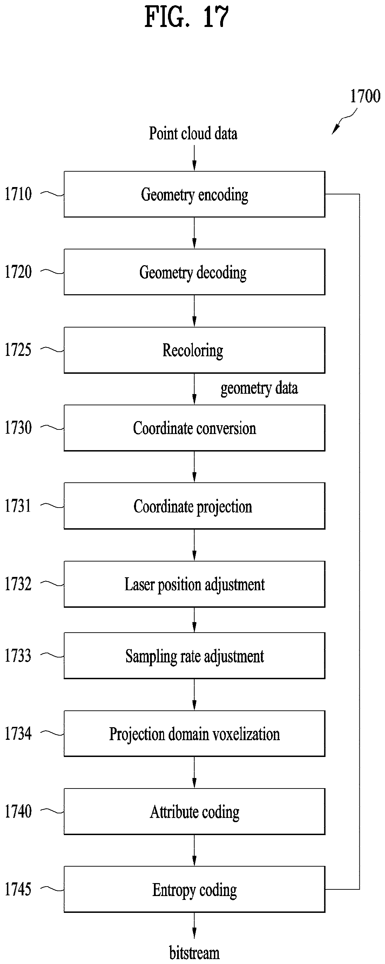

FIG. 17 illustrates an example of a processing process of the point cloud transmission device.

The flowchart 1700 in the figure illustrates an example of a processing procedure of the point cloud transmission device described with reference to FIGS. 15 to 16. The operation of the point cloud transmission device is not limited to this example, and operations corresponding to the respective elements may be performed in order shown in FIG. 17 or may not be performed sequentially.

As described with reference to FIGS. 15 and 16, the point cloud transmission device receives point cloud data and performs geometry encoding on the geometry (1710). The geometry encoding 1710 is the same as the geometry coding 1510 described with reference to FIG. 15, and the geometry coding described with reference to FIG. 16, the geometry encoding 1610, the geometry quantization 1611, and the entropy coding 1612 of FIG. 16, and thus a detailed description thereof will be omitted. The point cloud transmission device performs geometry decoding 1720 and recoloring 1725. Since the decoding 1720 and the recoloring 1725 are the same as the geometry decoding/recoloring 1520 of FIG. 15 and the inverse quantization and decoding 1630 and recoloring 1631 of FIG. 16, a detailed description thereof will be omitted. The point cloud transmission device according to the embodiments performs projection on the recolored geometry data. The projection according to the embodiments includes coordinate transformation 1730, coordinate projection 1731, laser position adjustment 1733, sampling rate adjustment 1733, and projection domain voxelization 1734. The point cloud transmission device performs the coordinate transformation 1730. The coordinate transformation 1730 according to the embodiments is the same as the projection 1632 and the coordinate transformation 1640 described with reference to FIG. 16, and thus a detailed description thereof will be omitted. The point cloud transmission device performs the coordinate projection 1731. The coordinate projection 1731 according to the embodiments is the same as the projection 1632 described with reference to FIG. 16, and thus a detailed description thereof will be omitted. In order to correct the projection, the point cloud transmission device may sequentially or selectively perform the laser position adjustment 1732, the sampling rate adjustment 1733, and the projection domain voxelization 1734. The laser position adjustment 1732, the sampling rate adjustment 1733, and the projection domain voxelization 1734 are the same as the laser position adjustment 1642, the sampling rate adjustment 1643, and the voxelization 1644 described with reference to FIG. 16, and thus a detailed description thereof will be omitted.

The point cloud transmission device according to the embodiments performs attribute coding 1740 and entropy coding 1745. The attribute coding 1740 and the entropy coding 1745 are the same as the attribute coding 1550 described with reference to FIG. 15 and the attribute coding described with reference to FIG. 16, for example, the attribute encoding 1621 and the entropy coding 1623, and thus a detailed description thereof will be omitted.

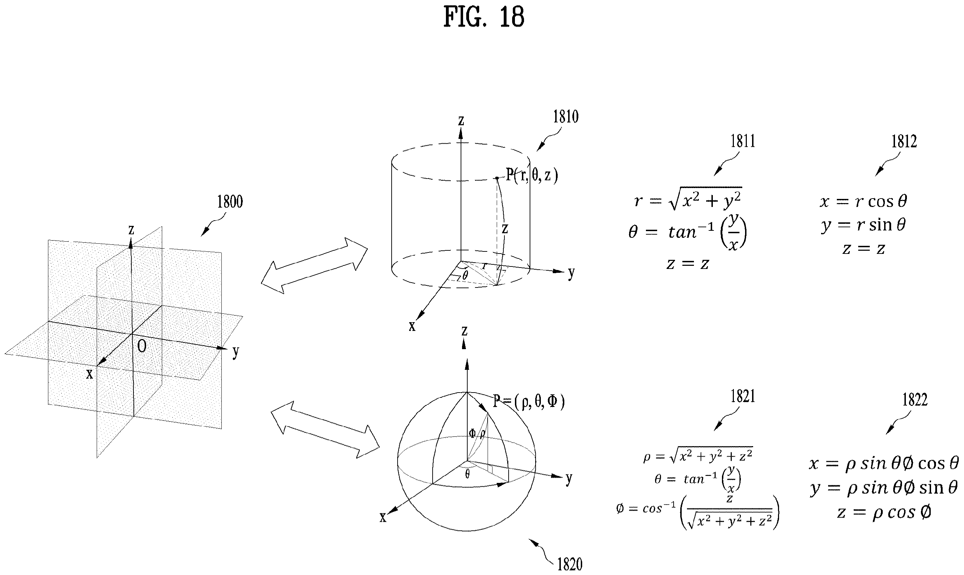

FIG. 18 illustrates an example of coordinate transformation.

As described with reference to FIGS. 15 to 18, the point cloud transmission device performs coordinate transformation (e.g., the coordinate transformation 1641, the coordinate transformation 1730, etc.). Geometry is information indicating, for example, the positions of points in the point cloud. As described with reference to FIG. 4, the geometry information may be expressed as values of a two-dimensional coordinate system (e.g., parameters $(x, y)$ of Cartesian coordinates composed of x and y axes, parameters $(r, \theta)$ of cylindrical coordinates), or values of a three-dimensional coordinate system (e.g., parameters $(x, y, z)$ of orthogonal coordinates, parameters $(r, \theta, z)$ of cylindrical coordinates, parameters $(\rho, \theta, \phi)$ of spherical coordinates, etc.). However, depending on the type and/or coordinate system of the point cloud data, the positions of points indicated by the geometry may be expressed as having irregular positions or distribution. For example, the geometry of LiDAR data expressed in the Cartesian coordinate system indicates that the distance between points located far from the origin increases. For example, in the case of geometry expressed in a cylindrical coordinate system, a uniform distribution may be expressed even for points far from the origin. However, for points close to the origin, the distance between the points increases, and thus a uniform distribution may not be expressed. Since representing the irregular positions and distribution of points requires a larger amount of information, that is, geometry, it may result in lowering the efficiency of geometry coding. Therefore, the point cloud encoder according to the embodiments (for example, the point cloud encoder described with reference to FIGS. 1, 4, 11, 14, and 15) may transform part and/or all of the coordinates of the geometry in order to increase the efficiency of the geometry coding.

FIG. 18 shows an example of coordinate systems that may be transformed to each other, i.e., a three-dimensional orthogonal coordinate system 1800, a cylindrical coordinate system 1810, and a spherical coordinate system 1820. Coordinate systems according to embodiments are not limited to the illustrated example.

The three-dimensional orthogonal coordinate system 1800 and the cylindrical coordinate system 1810 according to the embodiments may be transformed to each other.

The three-dimensional orthogonal coordinate system 1800 may be composed of an X-axis, a Y-axis, and a Z-axis that are orthogonal to each other at the origin. A point (or parameter) on the three-dimensional orthogonal coordinate system may be expressed as (x, y, z). The XY-plane formed by the X-axis and Y-axis, the YZ-plane formed by the Y-axis and the Z-axis, and the XZ-plane formed by the X-axis and the Z-axis may meet each other orthogonally at the origin. The terms X-axis, Y-axis, and Z-axis are merely used to distinguish each axis, and may be replaced with other terms.

The cylindrical coordinate system 1810 may be composed of an X-axis, a Y-axis, and a Z-axis that are orthogonal to each other at the origin. A point (or parameter) P on the cylindrical coordinate system 1810 may be expressed as (r, $\theta$, z). Here, r denotes the distance between a point obtained by orthogonal projection of a point P in the coordinate space into the XY-plane and the origin. $\theta$ denotes the angle between the positive direction of the X-axis and a straight line connecting the origin to a point obtained by orthogonal projection of the point P onto the XY-plane. z denotes the distance between the point P and the point obtained by orthogonal projection of the point P onto the XY-plane. The terms X-axis, Y-axis, and Z-axis are merely used to distinguish each axis, and may be replaced with other terms.

Equation 1811 shown in the figure represents an equation for expressing geometry information represented as orthogonal coordinates in the cylindrical coordinate system in transforming orthogonal coordinates to cylindrical coordinates according to orthogonal-cylindrical coordinate transformation. That is, Equation 1811 indicates that a parameter of the cylindrical coordinate system may be expressed with one or more parameters of the orthogonal coordinate system according to the coordinate transformation (eg $r = \sqrt{x^2 + y^2}$ ).

Equation 1812 shown in the figure represents an equation for expressing geometry information represented as cylindrical coordinates in the orthogonal coordinate system in transforming cylindrical coordinates to orthogonal coordinates according to cylindrical-orthogonal coordinate transformation. That is, Equation 1812 indicates that a parameter of the orthogonal coordinate system may be expressed with one or more parameters of the cylindrical coordinate system according to the coordinate transformation (for example, x = r cos$\theta$)).

The three-dimensional orthogonal coordinate system 1800 and the spherical coordinate system 1820 according to the embodiments may be transformed to each other.

The spherical coordinate system 1820 according to the embodiments may be composed of an X-axis, a Y-axis, and a Z-axis that are orthogonal to each other at the origin. A point (or parameter) P on the spherical coordinate system may be expressed as ($\rho$, $\phi$, $\theta$). Here, $\rho$ denotes the distance from the origin O to the point P, and has a value greater than or equal to 0 ($\rho \geq 0$)). $\phi$ denotes the angle between the positive direction of the Z axis and the line from the origin to the point P, and has a value within a certain range (($0 \leq \emptyset \leq \pi$)). $\theta$ denotes the angle between a line from the origin to a point obtained by orthogonal projection of the point P onto the XY-plane and the positive direction of the X-axis and has a value within a certain range ( ($0 \leq \theta \leq 2\pi$)). The terms X-axis, Y-axis, and Z-axis are merely used to distinguish each axis, and may be replaced with other terms.

Equation 1821 shown in the figure represents an equation for expressing geometry information represented as orthogonal coordinates in the spherical coordinate system in transforming orthogonal coordinates to spherical coordinates according to orthogonal-spherical coordinate transformation. That is, Equation 1821 indicates that a parameters of the spherical coordinate system may be expressed with one or more parameters of the orthogonal coordinate system according to the coordinate transformation (e.g., $\rho = \sqrt{x^2 + y^2 + z^2}$ ).

Equation 1822 shown in the figure represents an equation for expressing geometry information represented as spherical coordinates in the orthogonal coordinate system in transforming spherical coordinates to orthogonal coordinates according to spherical-orthogonal coordinate transformation. That is, Equation 1822 indicates that a parameter of the orthogonal coordinate system may be expressed with one or more parameters of the spherical coordinate system according to the coordinate transformation (e.g., z = ρ sin θ).

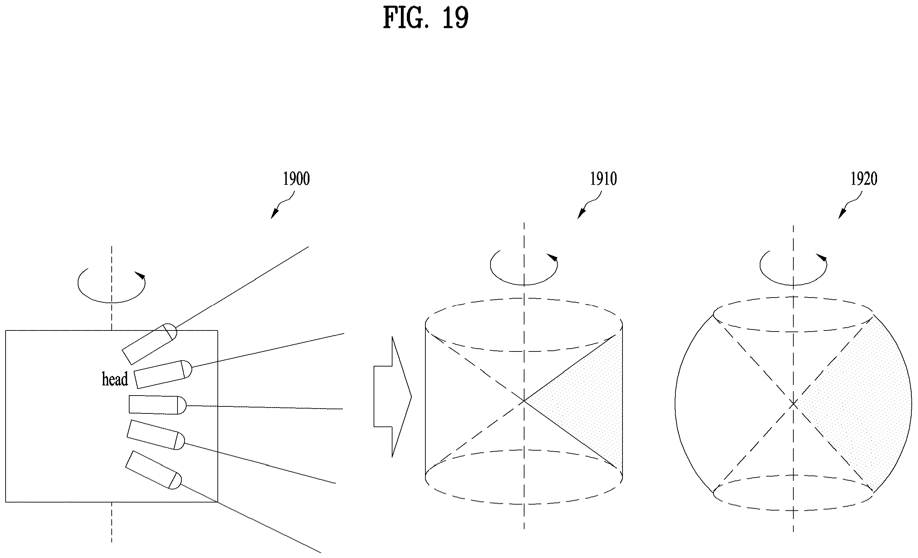

FIG. 19 illustrates an example of a coordinate system.

FIG. 19 illustrates an example of a coordinate system of LiDAR data in consideration of arrangement of laser modules. The leftmost part of FIG. 19 shows a LiDAR (Light Detection And Ranging or Light Imaging, Detection, And Ranging) head 1900 that collects LiDAR data. LiDAR data is obtained through a LiDAR technique, which is to measure the distance by emitting a laser onto an object. The LiDAR head 1900 includes one or more laser modules (or laser sensors) arranged at an angle in a vertical plane and rotates about a vertical axis. The times at which the laser rays output from the respective laser modules are reflected from an object and returned (and/or wavelengths thereof) may be equal to or different from each other. Accordingly, the LiDAR data is a 3D representation constructed based on a difference in return time and/or a difference in wavelength between laser rays from the object. In order to have a wider coverage, the laser modules are arranged to radially output the laser. Accordingly, the coordinate system according to the embodiments has a sector-shaped plane corresponding to the form in which the laser modules output laser, and includes a sector-shaped cylindrical coordinate system 1910 obtained by rotating the plane 360 degrees around the axis of the cylindrical coordinate system, and an arc-shaped spherical coordinate system 1920 obtained by rotating an arc shape, which is a part of a combination of the cylindrical coordinate system and the spherical coordinate system, 360 degrees around the axis of the spherical coordinate system. The sector-shaped cylindrical coordinate system 1910 according to the embodiments has a certain range when the vertical direction of the cylindrical coordinate system is represented as an elevation. In addition, the arc-shaped spherical coordinate system 1920 according to the embodiments has a certain range when the vertical direction of the spherical coordinate system is represented as an elevation.

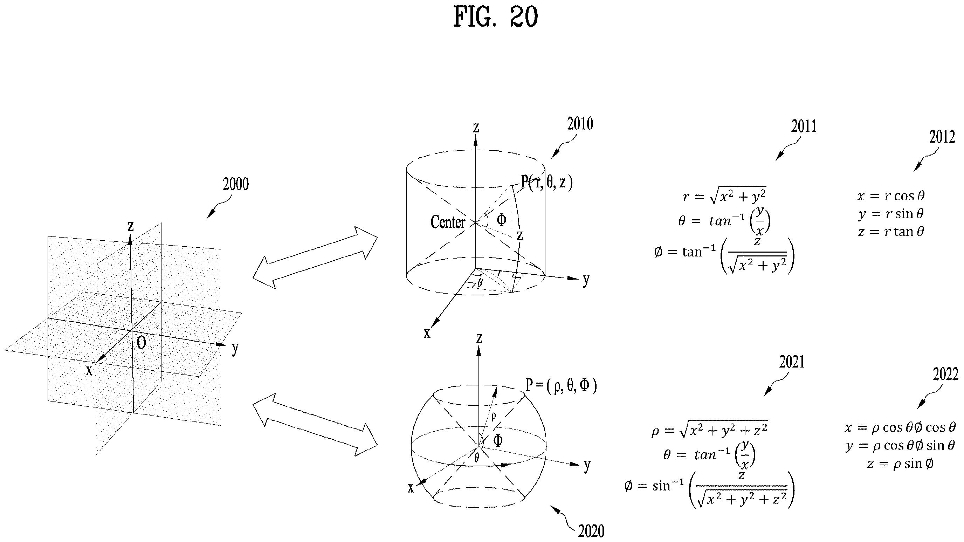

FIG. 20 illustrates an example of coordinate transformation.

As described with reference to FIGS. 15 to 18, the point cloud transmission device performs coordinate transformation (e.g., the coordinate transformation 1641, the coordinate transformation 1730, etc.). FIG. 20 illustrates coordinate transformation in which an orthogonal coordinate system 2000 (for example, the orthogonal coordinate system 1800 described with reference to FIG. 18) is transformed to a sector-shaped cylindrical coordinate system 2010 (for example, the sector-shaped cylindrical coordinate system 1910 described with reference to FIG. 19) and an arc-shaped spherical coordinate system 2020 (for example, the arc-shaped spherical coordinate system 1920 described with reference to FIG. 19), and vice versa based on the characteristics of the laser modules. Transformable coordinate systems according to embodiments are not limited to the above-described example.

The orthogonal coordinate system 2000 according to the embodiments may be transformed to the sector-shaped cylindrical coordinate system 2010, and vice versa.

The orthogonal coordinate system 2000 according to the embodiments is the same as the 3D orthogonal coordinate system 1800 described with reference to FIG. 18, and thus a detailed description thereof will be omitted.

The sector-shaped cylindrical coordinate system 2010 according to the embodiments may be composed of an X-axis, a Y-axis, and a Z-axis that are orthogonal to each other at the origin. A point (or parameter) P on the sector-shaped cylindrical coordinate system 2010 may be expressed as (r, θ, φ). Here, r denotes the distance between a point obtained by orthogonal projection of the point P in the coordinate space onto the XY-plane and the origin. θ denotes the angle between the positive direction of the X-axis and a straight line connecting the origin to a point obtained by orthogonal projection of the point P onto the XY-plane. φ denotes the angle between the straight line extending from the center point of the planar sector described with reference to FIG. 19 and perpendicular to the straight line connecting the point P and the point obtained by orthogonal projection of the point P onto the XY-plane and the straight line connecting the center and the point P (as indicated by dotted lines). The terms X-axis, Y-axis, and Z-axis are merely used to distinguish each axis, and may be replaced with other terms.

Equation 2011 shown in the figure represents an equation for expressing geometry information represented as orthogonal coordinates in the sector-shaped cylindrical coordinate system in transforming the orthogonal coordinate system 2000 to the sector-shaped cylindrical coordinate system 2010 according to the orthogonal-sector cylindrical coordinate transformation. That is, Equation 2011 indicates that a parameter of the sector-shaped cylindrical coordinate system may be expressed with one or more parameters of the orthogonal coordinate system according to the coordinate transformation (e.g., $r = \sqrt{x^2 + y^2}$).

Equation 2012 shown in the figure is an equation for expressing geometry information represented in the sector-shaped cylindrical coordinate system as orthogonal coordinates in transforming the sector-shaped cylindrical coordinate system to the orthogonal coordinate system according to sector-shaped cylindrical-orthogonal coordinate transformation. That is, Equation 2012 indicates that a parameter of the orthogonal coordinate system may be expressed with one or more parameters of the sector-shaped cylindrical coordinate system according to the coordinate transformation (for example, x = r cos θ).

The orthogonal coordinate system 2000 according to the embodiments may be transformed to the arc-shaped spherical coordinate system 2020, and vice versa. The arc-shaped spherical coordinate system 2020 according to embodiments may be composed of an X-axis, a Y-axis, and a Z-axis that are orthogonal to each other at the origin. A point (or parameter) P on the arc-shaped spherical coordinate system may be expressed as ($\rho$, $\theta$, $\phi$). Here, $\rho$ denotes the distance from the origin O to the point P and has a value greater than or equal to 0 ( $\rho \geq 0$). $\theta$ denotes the angle between a line connecting the origin and a point obtained by orthogonal projection of the point P onto the XY-plane and the positive direction of the X-axis, and has a value within a certain range ($0 \leq \theta \leq 2\pi$). $\phi$ denotes the angle between a line connecting the point P and the point obtained by orthogonal projection of the point P onto the XY-plane and the straight line connecting the origin and the point P (as indicated by dotted lines). The terms X-axis, Y-axis, and Z-axis are merely used to distinguish each axis, and may be replaced with other terms.

Equation 2021 shown in the figure represents an equation for expressing geometry information represented as orthogonal coordinates in the arc-shaped spherical coordinate system in transforming the orthogonal coordinate system to the arc-shaped spherical coordinate system according to the orthogonal-arc-shaped spherical coordinate transformation. That is, Equation 1821 indicates that a parameter of the arc-shaped spherical coordinate system may be expressed with one or more parameters of the orthogonal coordinate system according to the coordinate transformation (for example, $\rho = \sqrt{x^2 + y^2 + z^2}$ ).

Equation 2022 shown in the figure represents an equation for expressing geometry information represented in the arc-shaped spherical coordinate system as orthogonal coordinates in transforming the arc-shaped spherical coordinate system to the orthogonal coordinate system according to arc-shaped spherical-orthogonal coordinate transformation. That is, Equation 2022 indicates that a parameter of the orthogonal coordinate system may be expressed with one or more parameters of the arc-shaped spherical coordinate system according to the coordinate transformation (for example, $z = \rho \sin \varphi$).

The point cloud data transmission device according to the embodiments (for example, the point cloud data transmission device described with reference to FIGS. 1, 11, 14 and 15) generates signaling information related to coordinate transformation and transmit the same to a point cloud data reception device (for example, the point cloud data reception device described with reference to FIGS. 1, 13, 14, and 16). The signaling information related to the coordinate transformation may be signaled at a sequence level, a frame level, a tile level, a slice level, or the like. The point cloud decoder according to the embodiments (for example, the point cloud decoder described with reference to FIGS. 1, 13, 14, and 16) may perform the decoding operation, which is the reverse of the encoding operation of the point cloud encoder, based on the signaling information related to the coordinate transformation. In addition, the point cloud decoder according to the embodiments may perform coordinate transformation by deriving the same based on whether coordinate transformation is performed on a neighboring block, the size of the block, the number of points, and a quantization value, without receiving signaling information related to the coordinate transformation.

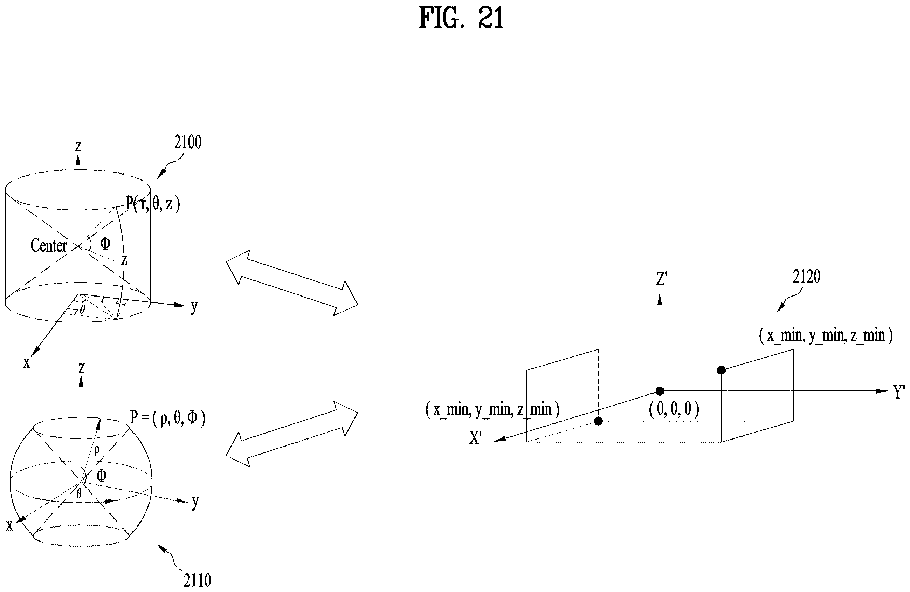

FIG. 21 illustrates an example of coordinate projection.

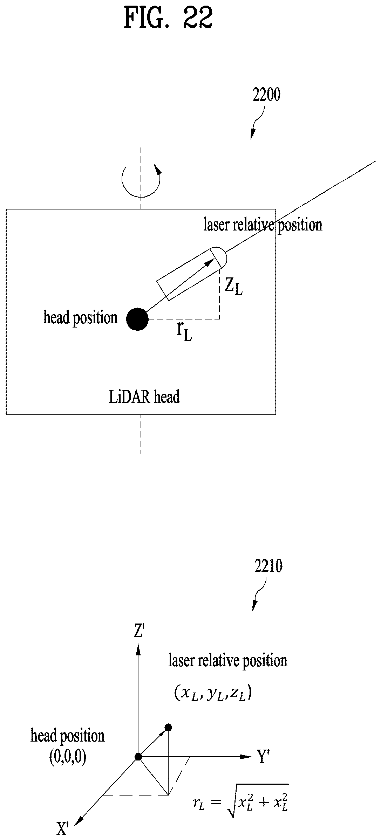

The point cloud transmission device performs coordinate projection in which a geometry represented in a transformed coordinate system obtained by the coordinate transformation described with reference to FIGS. 15 to 20 is projected in a compressible form. FIG. 21 illustrates an example of the coordinate projection described with reference to FIGS. 15 to 17 (e.g., the coordinate projection 1641). FIG. 22 illustrates an operation of transforming (projecting) a sector-shaped cylindrical coordinate system 2100 (for example, the sector-shaped cylindrical coordinate system 1910 described with reference to FIG. 19, the sector-shaped cylindrical coordinate system 2010 described with reference to FIG. 20) and an arc-shaped spherical coordinate system 2110 (for example, the arc-shaped spherical coordinate system 1920 and the arc-shaped spherical coordinate system 2020 described with reference to FIG. 20) to a rectangular column space 2120, and vice versa. The rectangular column space 2120 according to the embodiments may be represented in a three-dimensional coordinate system composed of an x-axis, a y-axis, and a z-axis (or an x'-axis, a y'-axis, and a z'-axis), and may be referred to as a bounding box. In addition, each of the x'-axis, the y'-axis, and the z'-axis has a maximum value (x_max, y_max, z_max) and a minimum value (x_min, y_min, z_min). In the transformation operation illustrated in FIG. 21, parameters (r, $\theta$, $\phi$) representing a point P in the sector-shaped cylindrical coordinate system 2100 and parameters ($\rho$, $\theta$, $\phi$) representing a point P in the arc-shaped spherical coordinate system 2110 are expressed with the parameters of the x'-axis, the y'-axis, and the z'-axis, respectively. Each parameter of the parameters (r, $\theta$, $\phi$) and parameters ($\rho$, $\theta$, $\phi$) may correspond to one of the x', y', and z'-axes (e.g., r corresponds the x'-axis), or may be transformed according to a separate transformation equation so as to correspond thereto. For example, the parameter $\phi$ of the sector-shaped cylindrical coordinate system 2100 having a limited range is mapped to the z'-axis by applying a tangent function. Thus, the values mapped on the z'-axis converge according to the limited range, and accordingly the compression efficiency may be increased.

An equation representing the projection of the parameters (r, $\theta$, $\phi$) of the arc-shaped cylindrical coordinate system 2110 according to the embodiments is given as follows.

[Equation 1]

$$f_x(r) = r = \sqrt{(x - x_c)^2 + (y - y_c)^2},$$

$$f_y(\theta) = \theta = tan^{-1}\left(\frac{y - y_c}{x - x_c}\right),$$

$$f_z(\phi) = \phi = tan^{-1}\left(\frac{z - z_c}{\sqrt{(x - x_c)^2 + (y - y_c)^2}}\right).$$

That is, $f_x(r)$ denotes projection of the parameter r onto the x-axis, $f_y(\theta)$ denotes projection of the parameter $\theta$ onto the y-axis, and $f_z(\phi)$ denotes projection of the parameter $\phi$ onto the z-axis. An equation representing projection minimizing the calculation of the trigonometric function in the above equation is as follows.

[Equation 2]

$$f_x(r) = r^2 = (x - x_c)^2 + (y - y_c)^2,$$

$$f_y(\theta) = \cos^2\frac{\theta}{2} = \frac{1 + \cos\theta}{2} = \left[1 + \frac{x - x_c}{\sqrt{(x - x_c)^2 + (y - y_c)^2}}\right]/2 = \frac{r + x - x_c}{2r},$$

$$f_z(\phi) = \tan\phi = \frac{z - z_c}{\sqrt{(x - x_c)^2 + (y - y_c)^2}} = \frac{z - z_c}{r}$$

An equation representing projection of the parameters ($\rho$, $\theta$, $\phi$) of the arc-shaped spherical coordinate system 2110 according to the embodiments is as follows.

[Equation 3]

$$f_x(\rho) = \rho = \sqrt{(x - x_c)^2 + (y - y_c)^2 + (z - z_c)^2},$$

$$f_y(\theta) = \theta = tan^{-1}\left(\frac{y - y_c}{x - x_c}\right),$$

$$f_z(\phi) = \phi = sin^{-1}\left(\frac{z - z_c}{\sqrt{(x - x_c)^2 + (y - y_c)^2 + (z - z_c)^2}}\right).$$

That is, $f_x(\rho)$ denotes projection of the parameter $\rho$ onto the x-axis, $f_y(\theta)$ denotes projection of the parameter $\theta$ onto the y-axis, and $f_z(\phi)$ denotes projection of the parameter $\phi$ onto the z-axis. An equation representing projection minimizing the calculation of the trigonometric function in the above equation is as follows.

[Equation 4]

$$f_x(\rho) = \rho^2 = (x - x_c)^2 + (y - y_c)^2 + (z - z_c)^2,$$

$$f_y(\theta) = \cos^2\frac{\theta}{2} = \frac{1 + \cos\theta}{2} = \left[1 + \frac{x - x_c}{\sqrt{(x - x_c)^2 + (y - y_c)^2}}\right]/2 = \frac{r + x - x_c}{2r},$$

$$f_z(\phi) = \sin\phi = \frac{z - z_c}{\sqrt{(x - x_c)^2 + (y - y_c)^2 + (z - z_c)^2}} = \frac{z - z_c}{\rho}$$

.

In the equations above, $(x_c, y_c, z_c)$ denotes a center position the sector-shaped cylindrical coordinate system 2100 before projection. The center position is the same as the center of the planar sector described with reference to FIG. 19. In addition, $(x_c, y_c, z_c)$ according to the embodiments may represent a LiDAR head position (e.g., the origin of the x, y, and z coordinates of the world coordinate system).

FIG. 22 illustrates an example of laser position adjustment.

FIG. 22 illustrates an example of the laser position adjustment 1642 described with reference to FIG. 16 and the laser position adjustment 1732 described with reference to FIG. 17. As described with reference to FIG. 19, the LiDAR head (for example, the LiDAR head 1900 described with reference to FIG. 19) includes one or more laser modules arranged in a vertical plane. In order to secure a lot of data with a wider coverage, the one or more laser modules are arranged to radially output the laser. The actual laser is output at the ends of the laser modules. Accordingly, the position of the laser is different from the position of the LiDAR head corresponding to the center of the planar sector described with reference to FIGS. 19 to 20. In addition, there is a difference in position between the uppermost laser ray output from the laser module disposed at the upper portion of the LiDAR head and the lowest laser ray output from the laser module disposed at the lower portion of the LiDAR head. When the difference in position between the laser rays is not reflected, the accuracy of the projection may be degraded. Accordingly, the point cloud transmission device according to the embodiments performs projection reflecting laser position adjustment performed to make the start point of each laser ray coincide with the LiDAR head position.

The left part of FIG. 22 shows a structure 2200 of a LiDAR head including any laser module that outputs a laser ray. As shown in the figure, the position of the laser output from the laser module is represented as a relative position spaced apart from the LiDAR head position by $r_L$ in the horizontal direction and $z_L$ in the vertical direction.

The right part of FIG. 22 shows an example 2210 of representation of the relative position of the laser in a three-dimensional coordinate system. The three-dimensional coordinate system shown in the figure is a coordinate system for expressing the projection (for example, the rectangular column space 2120) described with reference to FIG. 21 and is composed of an x'-axis, a y'-axis, and a z'-axis. The above-described head position may be set to the origin (0,0,0) of the coordinate system, and the relative position of the laser is expressed as $(x_L, y_L, z_L)$. The parameter $(x_L, y_L)$ is expressed based on $r_L$, which is a relative distance from the head position in the horizontal direction, as follows.

$$x_L = r_L \cdot \cos\theta, \text{ and } y_L = r_L \cdot \sin\theta$$

$(x_L, y_L, z_L)$ according to the embodiments may be calculated directly by the point cloud transmission device and reception device, or may be transmitted to the point cloud transmission device and reception device through signaling or the like.

The laser position applied values of the parameters $(r, \theta, \phi)$ of the sector-shaped cylindrical coordinate system (for example, the sector-shaped cylindrical coordinate system 2110) is given as follows.

[Equation 5]

$$r_L = \sqrt{(x - x_c - x_L)^2 + (y - y_c - y_L)^2} = \sqrt{(x - x_c)^2 + (y - y_c)^2} - r_L,$$

$$\theta_L = \tan^{-1}\left(\frac{y - y_c - y_L}{x - x_c - x_L}\right),$$

$$r_L = \sqrt{(x - x_c - x_L)^2 + (y - y_c - y_L)^2} = \sqrt{(x - x_c)^2 + (y - y_c)^2} - r_L.$$

The laser position applied values of the parameters (ρ, θ, φ) of the arc-shaped cylindrical coordinate system (for example, the arc-shaped cylindrical coordinate system 2110) is given as follows.

[Equation 6]

$$\rho_L = \sqrt{(x - x_c - x_L)^2 + (y - y_c - y_L)^2 + (z - z_c - z_L)^2},$$

$$\theta_L = tan^{-1}\left(\frac{y - y_c - y_L}{x - x_c - x_L}\right),$$

$$\phi_L - sin^{-1}\left(\frac{z - z_c - z_L}{\sqrt{(x - x_c - x_L)^2 + (y - y_c - y_L)^2 + (z - z_c - z_L)^2}}\right)$$

.

As described above, the point cloud transmission device may perform attribute coding by reorganizing points based on the Morton code. The Morton code assumes that the position information about each point is a positive integer. Therefore, the point cloud transmission device performs voxelization (for example, voxelization described with reference to FIGS. 4 to 6) such that the parameters representing the positions of the projected point cloud data (e.g., the parameters of the coordinate system representing the square column space 2120 described with reference to FIGS. 21 to 22) are positive integers. When the distance between points is sufficient, lossless compression is possible even when voxelization is performed. However, when the distance between points is short, loss may occur when voxelization is performed.

Accordingly, the point cloud transmission device performs additional correction by performing sampling rate adjustment (e.g., the sampling rate adjustment 1643 described with reference to FIG. 16) on the projected point cloud data (e.g., geometry).

The sampling rate adjustment according to the embodiments is performed by defining a scale factor for each axis of projection in consideration of a range of a projection value and a characteristic (e.g., LiDAR) of the data acquisition device. As described with reference to FIGS. 19 to 22, the parameter r of the sector-shaped spherical coordinate system (e.g., the sector-shaped cylindrical coordinate system 1910, the sector-shaped cylindrical coordinate system 2010, the sector-shaped cylindrical coordinate system 2100, etc.) and the parameter ρ of the arc-shaped spherical coordinate system (the arc-shaped spherical coordinate system 1920, the arc-shaped spherical coordinate system 2020, and the arc-shaped spherical coordinate system 2110) denote the distance from the center of each coordinate system to a target point (for example, the point P described with reference to FIGS. 19 to 21). Accordingly, the parameters r and ρ have values greater than or equal to 0, and the frequency of the data is determined according to the resolution according to the distance of the laser and the analysis capability of the acquisition device. The parameter θ of the sector-shaped cylindrical coordinate system and the act-shaped spherical coordinate system denotes the horizontal angle of rotation around a vertical axis. Accordingly, the parameter θ may be in the range of 0 to 360 degrees, which determines the frequency of data acquired per degree while the LiDAR head (e.g., the LiDAR head described with reference to FIGS. 20 to 22) rotates. The parameter φ of the arc-shaped spherical coordinate system denotes the angle with respect to the vertical axis. Since the angle with respect to the vertical axis is highly correlated with the angle of a single laser, the parameter φ may range from -π/2 to π/2, and the frequency of data may be determined based on the number of lasers, the vertical position of the laser, and the accuracy of the laser. Therefore, the sampling rate adjustment according to the embodiments defines scale factors for projection parameters based on the characteristics of each parameter as described above. Hereinafter, for simplicity, a scale factor for the projection (parameters r, θ, φ) of the sector-shaped cylindrical coordinate system will be described. However, the sampling rate adjustment is not limited to this example. The sampling rate adjustment may be equally applied to the projection (parameters ρ, θ, φ) of the arc-shaped spherical coordinate system as well as other projections.

The sampling rate adjustment for projection of the sector-shaped cylindrical coordinate system according to the embodiments is expressed as follows.

$$f_s(r_L) = s_r \cdot f(r_L), \quad f_s(\theta_s) = s_\theta \cdot f(\theta_L), \quad f_s(\phi_s) = s_\phi \cdot f(\phi_L)$$

Here, $r_L$, $\theta_L$, and $\phi_L$ are parameters representing a point obtained by performing the laser position adjustment. $f(r_L)$, $f(\theta_L)$, and $f(\phi_L)$ represent the respective axes of the 3D coordinate system in which the parameters are projected. $s_r$ is a scale factor for the parameter $r_L$ and is applied to the axis represented by $f(r_L)$ (e.g., the X'-axis). $s_\theta$ is a scale

factor for $\theta_L$ and is applied to the axis represented by $f(\theta_L)$ (e.g., Y'-axis). $s_\phi$ is a scale factor for $\phi_L$ and is applied to the axis represented by $f(\phi_L)$ (e.g., the Z'-axis).

The sampling rate adjustment for the projection of the sector-shaped cylindrical coordinate system according to the embodiments may be expressed as follows.

$$\mathrm{x}' = s_r \cdot r_L, \ \mathrm{y}' = s_\theta \cdot \theta_L, \text{ and } z' = s_\phi \cdot \tan \phi_L$$

The scale factor parameters $s_r$, $s_\theta$, and $s_\phi$ according to the embodiments may be derived from the maximum length of the edge of the bounding box normalized to the length of the bounding box edge of each axis.

The scale factor according to the embodiments may be defined based on a mechanical property of the point cloud data acquisition device. For example, when an acquisition device (e.g., LiDAR head) having N lasers arranged in a vertical plane rotates in the horizontal direction and detects M laser reflections per degree, and the radius of the spot generated by each laser light source is D, the scale factors are defined as follows.

$$s_r = k_r, \ s_\theta = k_\theta\, M, \text{ and } s_\phi = k_\phi D$$

Here, $k_r$, $k_\theta$, and $k_\phi$ denote constants.

When the minimum distance between data acquired per one laser light source is expressed in a vertical direction, a horizontal direction, and a radial direction, the scale factors according to the embodiments are expressed as follows.

$$s_r = \frac{k_r}{\min(d_r)}, \ s_\theta = \frac{k_\theta}{\min(d_\theta)}, \text{ and } s_\phi = \frac{k_\phi}{\min(d_\phi)}$$

Here, $d_r$, $d_\theta$, and $d_\phi$ denote the distances for the direction in which the radius increases, the angle in the rotation direction, and the angle in the vertical direction, respectively. min() may denote a minimum value in the point cloud data or a minimum value according to physical characteristics.

In addition, the scale factors according to the embodiments may be defined as a function of density on each axis and are expressed as follows.

$$s_r = k_r N_r / D_r, \ s_\theta = k_\theta N_\theta / D_\theta, \text{ and } s_\phi = k_\phi N_\phi / D_\phi$$

That is, a relatively large scale factor is applied to an axis having a high density per unit length, and a relatively small scale factor is applied to an axis having a low density per unit length. Here, N denotes the maximum number of points in a direction parallel to each axis, and D denotes the length of each axis. The value obtained by dividing N by D corresponds to the density of the corresponding axis.

The scale factors according to the embodiments may be defined according to the importance of information. For example, information close to the origin may be considered as information of relatively high importance, and information far from the origin may be considered as information of relatively low importance. Therefore, the scale factors may be defined to assign a relative weight to information close to the origin, information in the front based on the horizontal/vertical angle, or information near the horizon, and is expressed as follows.

$$s_r = k_r / g(r), \ s_\theta = k_\theta / g(\theta), \text{ and } s_\phi = k_\phi / g(\phi)$$

Here, $g(r)$, $g(\theta)$, and $g(\phi)$ denoting the weights for the respective axes, and may be expressed as an reciprocal of a step function or an exponential function indicating a value set according to a range representing an important region.

The point cloud transmission device according to the embodiments may move each axis to make each axis start from the origin such that the projected point cloud data (e.g., geometry) has a positive value, or correct the axes such that the length of each axis is power of 2. The projected point cloud data according to the correction is expressed as follows.

$$f_s(r_L) = \frac{2^{nr}-1}{max_r}[s_r \cdot f(r_L) - min_r] \quad , \quad f_s(\theta_s) = \frac{2^{n\theta}-1}{max_\theta}[s_\theta \cdot f(\theta_L) - min_\theta]$$

$$f_s(\phi_s) = \frac{2^{n\phi}-1}{max_\phi}[s_\phi \cdot f(\phi_L) - min_\phi]$$

When the lengths of the three axes are corrected to be equal to each other in order to increase compression efficiency, the projected point cloud data according to the correction is expressed as follows.

$$f_s'(r_L) = \frac{max}{max_r} f_s(r_L), \; f_s'(\theta_L) = \frac{max}{max_\theta} f_s(\theta_L), \text{ and } f_s'(\phi_L) = \frac{max}{max_\phi} f_s(\phi_L)$$

Here, max may mean max($max_r, max_\theta, max_\phi$). Alternatively, it may be a value corresponding to the nearest 2^n -1 among the numbers greater than max($max_r, max_\theta, max_\phi$).

The information on the sampling rate adjustment according to the embodiments (including information on the scale factors) may be transmitted to a point cloud reception device (for example, the reception device 10004 of FIG. 1, the point cloud decoder of FIGS. 10 and 11, the reception device of FIG. 13). The point cloud reception device may obtain the information on the sampling rate adjustment and perform sampling rate adjustment according to the information.

Table as below shows the summary of the Bjøntegaard delta (BD) rate and BD PSNR of the coordinate transformation on attribute coding (e.g., the predictive lift coding scheme). The overall average of the attribute, i.e., reflectance gains is 5.4%, 4.0%, 1.4%, and 2.7% for C1, C2, CW, and CY conditions.

TABLE

| C1 | lossless geometry, lossy attributes (all intra) End-to-End BD-AttrRate [%] | | | |
|---|---|---|---|---|
| | Luma | Chroma Cb | Chroma Cr | Reflectance |
| Cat1-A average | #DIV/0! | #DIV/0! | #DIV/0! | |
| Cat1-B average | #DIV/0! | #DIV/0! | #DIV/0! | |
| Cat3-fused average | #DIV/0! | #DIV/0! | #DIV/0! | #DIV/0! |
| Cat3-frame average | | | | |
| Overall average | #DIV/0! | #DIV/0! | #DIV/0! | |
| Avg. Enc Time [%] | | 97% | | |
| Avg. Dec Time [%] | | 94% | | |

| C2 | lossy geometry, lossy attributes (all intra) End-to-End BD-AttrRate [%] | | | | geom. BD-TotGeomRate [%] | |
|---|---|---|---|---|---|---|
| | Luma | Chroma Cb | Chroma Cr | Reflectance | D1 | D2 |
| Cat1-A average | #DIV/0! | #DIV/0! | #DIV/0! | | #DIV/0! | #DIV/0! |
| Cat1-B average | #DIV/0! | #DIV/0! | #DIV/0! | | #DIV/0! | #DIV/0! |
| Cat3-fused average | #DIV/0! | #DIV/0! | #DIV/0! | #DIV/0! | #DIV/0! | #DIV/0! |
| Cat3-frame average | | | | | 0.0% | -0.0% |
| Overall average | #DIV/0! | #DIV/0! | #DIV/0! | | -0.0% | -0.0% |
| Avg. Enc Time [%] | | | 99% | | | |
| Avg. Dec Time [%] | | | 94% | | | |

| CW | lossless geometry, lossless attributes (all intra) bpip ratio [%] | | | |
|---|---|---|---|---|
| | Geometry | Colour | Reflectance | Total |
| Cat1-A average | #DIV/0! | #DIV/0! | | #DIV/0! |
| Cat1-B average | #DIV/0! | #DIV/0! | | #DIV/0! |
| Cat3-fused average | #DIV/0! | #DIV/0! | #DIV/0! | #DIV/0! |
| Cat3-frame average | 100.0% | | 98.6% | 99.7% |
| Overall average | 100.0% | #DIV/0! | 98.6% | 99.7% |
| Avg. Enc Time [%] | | 98% | | |
| Avg. Dec Time [%] | | 98% | | |

| CY | lossless geometry, near-lossless attributes (all intra) 13) Hausdorff BD-AttrRate [%] | | | |
|---|---|---|---|---|
| | Luma | Chroma Cb | Chroma Cr | Reflectance |
| Cat1-A average | #DIV/0! | #DIV/0! | #DIV/0! | |
| Cat1-B average | #DIV/0! | #DIV/0! | #DIV/0! | |
| Cat3-fused average | #DIV/0! | #DIV/0! | #DIV/0! | #DIV/0! |
| Cat3-frame average | | | | -2.7% |
| Overall average | #DIV/0! | #DIV/0! | #DIV/0! | -2.7% |
| Avg. Enc Time [%] | | 96% | | |
| Avg. Dec Time [%] | | 96% | | |

Projection according to the embodiments is also applied to RAHT coding. The following table shows a summary of the BD rate of coordinate transformation in RAHT coding. It may be seen that the average for point cloud data (for example, Cat3 frame data) is greatly improved with gains of 15.3% and 12.5% for C1 and C3 conditions, respectively.

TABLE

| C1-A | lossless geometry, lossy attributes [all intra] End-to-End BD-AttrRate [%] | | | |
|---|---|---|---|---|
| | Luma | Chroma Cb | Chroma Cr | Reflectance |
| Cat1-A average | #DIV/0! | #DIV/0! | #DIV/0! | |
| Cat1-B average | #DIV/0! | #DIV/0! | #DIV/0! | |
| Cat3-fused average | #DIV/0! | #DIV/0! | #DIV/0! | #DIV/0! |
| Cat3-frame average | | | | |
| Overall average | #DIV/0! | #DIV/0! | #DIV/0! | |
| Avg. Enc Time [%] | 96% | | | |
| Avg. Dec Time [%] | 96% | | | |

| C2-ai | lossy geometry, lossy attributes [all intra] End-to-End BD-AttrRate [%] | | | | Geom BD-TotGeomRate [%] | |
|---|---|---|---|---|---|---|
| | Luma | Chroma Cb | Chroma Cr | Reflectance | D1 | D2 |
| Cat1-A average | #DIV/0! | #DIV/0! | #DIV/0! | | #DIV/0! | #DIV/0! |
| Cat1-B average | #DIV/0! | #DIV/0! | #DIV/0! | | #DIV/0! | #DIV/0! |
| Cat3-fused average | #DIV/0! | #DIV/0! | #DIV/0! | #DIV/0! | #DIV/0! | #DIV/0! |
| Cat3-frame average | | | | | 0.0% | 0.0% |
| Overall average | #DIV/0! | #DIV/0! | #DIV/0! | | 0.0% | 0.0% |
| Avg. Enc Time [%] | 110% | | | | | |
| Avg. Dec Time [%] | 183% | | | | | |

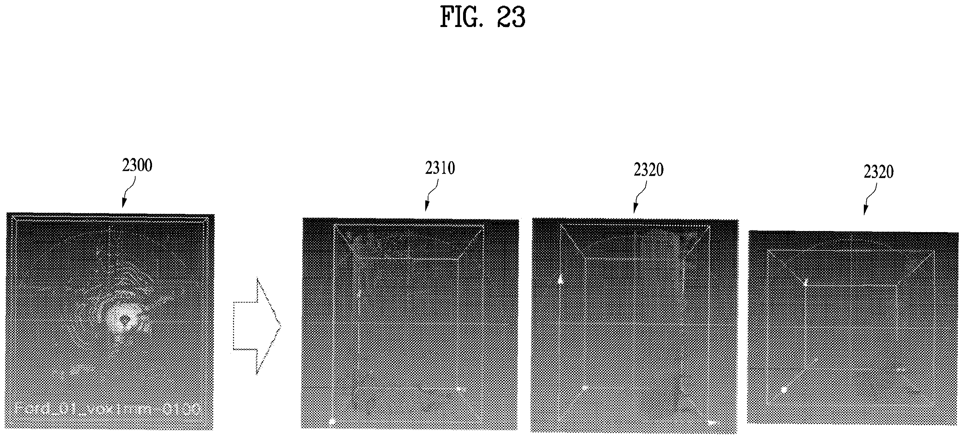

FIG. 23 illustrates an example of voxelization.

Through the processing described with reference to FIGS. 15 to 22, the point cloud data (geometry) expressed in a coordinate system composed of x, y, and z is transformed into a domain that is efficient for compression such as distance and angle. The transformed point cloud data is transformed into position information in integer units through the voxelization operation.

The left part of FIG. 23 shows an example 2300 of point cloud data to which projection is not applied, as one frame of a point cloud data sequence. The right part of FIG. 23 shows an example of point cloud data projected based on a sector-shaped cylindrical coordinate system. Specifically, the first example 2310 shows the projected point cloud data when the r-θ plane is viewed. The second example 2320 shows the projected point cloud data when the φ-θ plane is viewed. The third example 2330 shows the projected point cloud data when the φ-r plane is viewed.

The point cloud processing device (for example, the transmission device described with reference to FIGS. 1, 12, and 14) may transmit the encoded point cloud data in the form of a bitstream. The bitstream is a sequence of bits that form a representation of point cloud data (or a point cloud frame).

The point cloud data (or point cloud frame) may be partitioned into tiles and slices.

The point cloud data may be partitioned into multiple slices, and is encoded in a bitstream. One slice is a set of points and is expressed as a series of syntax elements representing all or part of the encoded point cloud data. One slice may or may not have dependencies on other slices. In addition, one slice includes one geometry data unit, and may have one or more attribute data units or may have zero attribute data unit. As described above, since attribute encoding is performed based on geometry encoding, the attribute data units are based on geometry data units in the same slice. That is, the point cloud data reception device (for example, the reception device 10004 or the point cloud video decoder 10006) may process attribute data based on the decoded geometry data. Accordingly, in a slice, a geometry data unit must appear before the associated attribute data units. The data units in the slice are necessarily contiguous, and the order of the slices is not specified.

A tile is a (three-dimensional) rectangular parallelepiped in a bounding box (for example, the bounding box described with reference to FIG. 5). The bounding box may include one or more tiles. One tile may fully or partially overlap another tile. One tile may include one or more slices.

Accordingly, the point cloud data transmission device may provide high-quality point cloud content by processing data corresponding to a tile according to the importance. That is, the point cloud data transmission device according to the embodiments may perform point cloud compression coding of data corresponding to an area important to a user with better compression efficiency and appropriate latency.

A bitstream according to embodiments contains signaling information and a plurality of slices (slice 0, ..., slice n). As shown in the figure, signaling information precedes slices in the bitstream. Accordingly, the point cloud data reception device may first obtain the signaling information and sequentially or selectively process a plurality of slices based on the signaling information. As shown in the figure, slice0 includes one geometry data unit Geom00 and two attribute data units Attr00 and Attr10. Also, the geometry data unit appears before the attribute data unit in the same slice. Accordingly, the point cloud data reception device processes (decodes) the geometry data unit (or geometry data), and then processes the attribute data unit (or attribute data) based on the processed geometry data. The signaling information according to the embodiments may be referred to as signaling data, metadata, or the like, but is not limited thereto.

According to embodiments, the signaling information includes a sequence parameter set (SPS), a geometry parameter set (GPS), and one or more attribute parameter sets (APSs). The SPS is encoding information about the entire sequence, such as a profile or a level, and may include comprehensive information (sequence level) about the entire sequence, such as a picture resolution and a video format. The GPS is information about geometry encoding applied to geometry included in the sequence (bitstream). The GPS may include information about an octree (e.g., the octree described with reference to FIG. 6) and information about an octree depth. The APS is information about attribute encoding applied to an attribute included in the sequence (bitstream). As shown in the figure, the bitstream contains one or more APSs (e.g., APS0, APS1... in the figure) according to an identifier for identifying an attribute.

According to embodiments, the signaling information may further include information about a tile (e.g., tile inventory). The information about the tile may include information about a tile identifier, a tile size, and the like. According to embodiments, the signaling information is applied to a corresponding bitstream as information about a sequence, that is, a bitstream level. In addition, the signaling information has a syntax structure including a syntax element and a descriptor describing the same. A pseudo code for describing the syntax may be used. In addition, the point cloud reception device (for example, the reception device 10004 of FIG. 1, the point cloud decoder of FIGS. 10 and 11, and the reception device of FIG. 13) may sequentially parse and process syntax elements appearing in the syntax.

Although not shown in the figure, the geometry data unit and the attribute data unit include a geometry header and an attribute header, respectively. The geometry header and the attribute header are signaling information applied at a corresponding slice level and have the above-described syntax structure.

The geometry header includes information (or signaling information) for processing a corresponding geometry data unit. Therefore, the geometry header appears first in the geometry data unit. The point cloud reception device may process the geometry data unit by first parsing the geometry header. The geometry header has an association with the GPS, which contains information about the entire geometry. Accordingly, the geometry header contains information specifying gps_geom_parameter_set_id included in the GPS. In addition, the geometry header contains tile information (e.g., tile_id) related to a slice to which the geometry data unit belongs, and a slice identifier.

The attribute header contains information (or signaling information) for processing a corresponding attribute data unit. Accordingly, the attribute header appears first in the attribute data unit. The point cloud reception device may process the attribute data unit by first parsing the attribute header. The attribute header has an association with the APS, which contains information about all attributes. Accordingly, the attribute header contains information specifying aps_attr_parameter_set_id included in the APS. As described above, attribute decoding is based on geometry decoding. Accordingly, the attribute header contains information specifying a slice identifier contained in the geometry header in order to determine a geometry data unit associated with the attribute data unit.

When the point cloud transmission device performs the projection described with reference to FIGS. 15 to 23, the signaling information in the bitstream may further include signaling information related to projection. The signaling information related to projection according to the embodiments may be included in signaling information (e.g., SPS, APS, etc.) at a sequence level, or included in a slice level (e.g., an attribute header), an SEI message, or the like. The point cloud reception device according to the embodiments may perform decoding including inverse projection based on the signaling information related to projection.

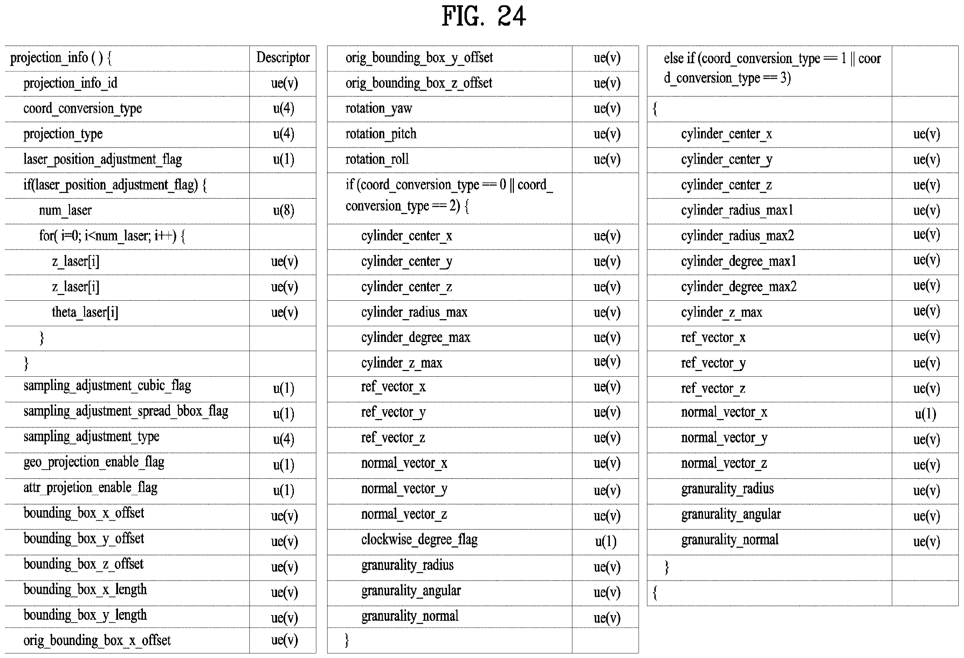

FIG. 24 shows an example of a syntax structure of signaling information related to projection.

Signaling information related to projection according to embodiments may be included in signaling information of various levels (e.g., sequence level, slice level, etc.). The signaling information related to projection is transmitted along with signaling information indicating whether the projection has been performed (e.g., projection_flag) to a point cloud reception device (for example, the reception device 10004 of FIG. 1, the point cloud decoder of FIGS. 10 and 11, the reception device of FIG. 13).

projection_flag: When the value of projection_flag is 1, it indicates that the data decoded in the decoder post-processing operation should be reprojected into the XYZ coordinate space.

The point cloud reception device checks whether to perform reprojection based on projection_flag. In addition, when the value of projection_flag is 1, the point cloud reception device may secure signaling information related to projection and perform reprojection. The signaling information related to projection according to the embodiments may be defined as a concept including the signaling information (projection_flag) indicating whether the projection has been performed, but is not limited thereto.

projection_info_id: An identifier for identifying projection information.

coordinate_conversion_type: Indicates a coordinate transformation type related to the coordinate transformation described with reference to FIGS. 19 to 20. coordinate_conversion_type equal to 0 indicates that the coordinates are cylindrical coordinates (for example, the cylindrical coordinate system 1810 described with reference to FIG. 18). coordinate_conversion_type equal to 1 indicates that the coordinates are spherical coordinates (for example, the spherical coordinate system 1820 described with reference to FIG. 18). coordinate_conversion_type equal to 2 indicates that the coordinates are sector-shaped cylindrical coordinates (for example, the sector-shaped cylindrical coordinate system 2010 described with reference to FIG. 20). coordinate_conversion_type equal to 3 indicates that the coordinates are arc-shaped spherical coordinates (for example, the arc-shaped spherical coordinate system 2020 described with reference to FIG. 20).

projection_type: Indicates the type of projection used for the coordinate transformation type (for example, the projection described with reference to FIG. 21). As described with reference to FIGS. 20 to 21, when the value of coordinate_conversion_type is 2, the coordinate system before projection is the sector-shaped cylindrical coordinate system (for example, the sector-shaped cylindrical coordinate system 2010 of FIG. 20, and the sector-shaped cylindrical coordinate system 2100 of FIG. 21). When the value of projection_type is 0, the x, y, and z-axes are matched with the parameters (r, θ, φ) of the sector-shaped cylindrical coordinate system, respectively (Equation 1). When the value of projection_type is 0, the x, y, and z-axes are matched with $r2$, $\cos^2\frac{\theta}{2}$, and tan φ (Equation 2). The projection type is not limited to this example and may be defined for each axis.

laser_position_adjustment _flag: Indicates whether or not laser position adjustment (e.g., the laser position adjustment described with reference to FIG. 22) is applied. The laser_position_adjustment_flag equal to 1 indicates that the laser position adjustment is applied.

num_laser: Indicates the total number of lasers. The following 'for' statement is an element indicating laser position information about each laser. Here, i denotes each laser, and is greater than or equal to 0 and less than the total number of lasers indicated by num_laser.

r laser [i]: Indicates the horizontal distance of the laser i from the central axis.
z_laser [i]: Indicates the vertical distance of the laser i from the horizontal center.
theta_laser [i]: Indicates the vertical angle of the laser i.

The position information about the laser according to the embodiments is not limited to the above example. For example, the laser position may be represented as parameters for the respective axes of a coordinate system representing projection, such as x_laser[i], y_laser[i], and z_laser[i].

The following elements indicate information related to sampling rate adjustment (e.g., the sampling rate adjustment 1643 described with reference to FIG. 16).

sampling_adjustment_cubic_flag: Indicates whether the lengths of the three axes are corrected to be equal to each other in the sampling rate adjustment. sampling_adjustment_cubic_flag equal to 1 indicates that the three axes should be corrected to have the same length.

sampling_adjustment_spread_bbox_flag: Indicates whether to perform sampling rate adjustment such that the distribution of point cloud data is uniform within the bounding box. When the value of sampling_adjustment_spread_bbox_flag is 1, a correction that uniformly widens the distribution within the bounding box is used in the sampling rate adjustment.

sampling_adjustment_type: Indicates the type of sampling rate adjustment. sampling_adjustment_type equal to 0 indicates sampling rate adjustment based on mechanical properties; sampling_adjustment_type equal to 1 indicates sampling rate adjustment based on the minimum axial distance between points; sampling_adjustment_type equal to 2 indicates sampling rate adjustment based on the density on each axis; and sampling_adjustment_type equal to 3 indicates sampling rate adjustment according to importance of the points. The type of sampling rate adjustment is not limited to this example.

geo_projection_enable_flag: Indicates whether projection is applied in geometry coding.

attr_projection_enable_flag: Indicates whether projection is applied in attribute coding.

bounding_box_x_offset, bounding_box_y_offset, and bounding_box_z_offset: Correspond to the X-axis, Y-axis, and Z-axis values representing the starting point of a range (bounding box) in which the projected point cloud data is contained. For example, when the value of projection_type is 0, the values of bounding_box_x_offset, bounding_box_y_offset, and bounding_box_z_offset are represented as (0, 0, 0). When the value of projection_type is 1, the values of bounding_box_x_offset, bounding_box_y_offset, and bounding_box_z_offset are represented as (-r_max1, 0, 0).

bounding_box_x_length, bounding_box_y_length, and bounding_box_z_length: May indicate a range (bounding box) containing projected point cloud data. For example, when the value of projection_type is 0, the values of bounding_box_x_length, bounding _box_y_length, and bounding_box_z_length are r_max, 360, and z_max, respectively. When the value of projection_type is 1, the values of bounding_box_x_length, bounding_box_y_length, and bounding_box_z_length are r_max1+r_max2, 180, and z_max, respectively.

orig_bounding_box_x_offset, orig_bounding_box_y_offset, and orig_bounding_box_z_offset: Correspond to the X-axis, Y-axis, and Z-axis values indicating the starting point of a range (bounding box) in which the point cloud data before projection is contained.

orig_bounding_box_x_length, orig_bounding_box_y_length, orig_bounding_box_z_length: May indicate a range (bounding box) in which the point cloud data before coordinate transformation is contained.

rotation_yaw, rotation_pitch, and rotation_roll: Indicate rotation information used in coordinate transformation.

When the value of coordinate_conversion_type is 0 or 2, that is, when the coordinate system before projection is a cylindrical coordinate system or a sector-shaped cylindrical coordinate system, the following elements indicate information related to the coordinate system.

cylinder_center_x, cylinder_center_y, and cylinder_center_z: Correspond to the X-axis, Y-axis, and Z-axis values indicating the position of the center of the cylindrical column represented by the cylindrical coordinate system before projection.

cylinder_radius_max, cylinder degree _max, and cylinder_z_max: Indicate the maximum values of the radius, angle, and height of the cylindrical column represented by the cylindrical coordinate system before projection.

ref_vector_x, ref_vector_y, and ref_vector_z: Indicate the directionality of a reference vector from the center in the (x, y, z) direction in projecting a cylindrical column represented by the cylindrical coordinate system, respectively. It may correspond to the x axis of the projected rectangular column space (for example, the rectangular column space 2120 described with reference to FIG. 21).

normal_vector_x, normal_vector_y, and normal_vector_z: Indicate the directionality of the normal vector of the cylindrical column represented by the cylindrical coordinate system from the center in the (x, y, z) direction. They may correspond to the z-axis of the projected rectangular column space (for example, the rectangular column space 2120 described with reference to FIG. 21).

clockwise_degree_flag: Indicates the direction in which the angle of the cylindrical column represented by the cylindrical coordinate system is estimated. clockwise_degree_flag equal to 1 indicates that the direction in which the angle of the cylindrical column is estimated is clockwise when the cylindrical column is viewed from the top. clockwise_degree_flag equal to 0 indicates that the direction in which the angle of the cylindrical column is estimated is counterclockwise when the cylindrical column is viewed from the top. The direction in which the angle of the cylindrical column represented by the cylindrical coordinate system is estimated may correspond to the direction of the y-axis of a projected rectangular column space (for example, the rectangular column space 2120 described with reference to FIG. 21).

granurality_angular, granurality_radius, and granurality_normal: Parameters indicating the resolution for the angle, the distance from the circular plane surface to the center of the cylindrical column, and the distance from the center in the direction of the normal vector. The parameters may correspond to the above-described scale factors $\alpha$, $\beta$, and $\gamma$, respectively.

As shown in the figure, when the value of coordinate_conversion_type is 1 or 3, that is, when the coordinate system before projection is a spherical coordinate system or a arc-shaped spherical coordinate system, and when the value of coordinate_conversion_type is 0 or 2, that is, the coordinate system before projection is a cylindrical coordinate system or a sector-shaped cylindrical coordinate system, the syntax structure of signaling information related to projection includes the same elements as elements indicating information related to the corresponding coordinate system. Details of the elements are the same as those described above, and thus a description thereof will be omitted.

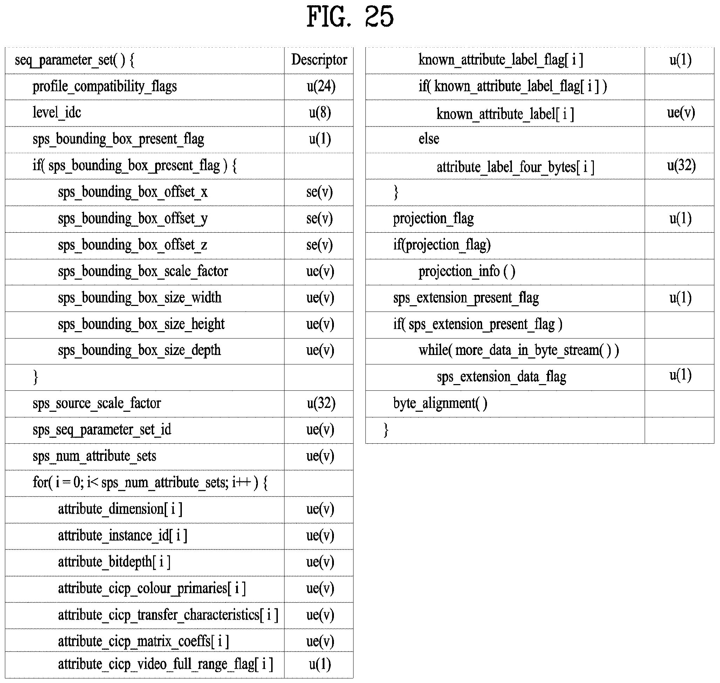

FIG. 25 shows an example of signaling information according to embodiments.

FIG. 25 is a syntax structure of an SPS, and shows an example in which the signaling information related to projection is included in the SPS of a sequence level.

profile_compatibility_flags: Indicates whether a bitstream conforms to a specific profile for decoding or another profile. The profile specifies constraints imposed on the bitstream to specify capabilities for decoding of the bitstream. Each profile is a subset of algorithmic features and limitations and is supported by all decoders conforming to that profile. profile_compatibility_flags is for decoding and may be defined according to a standard or the like.

level_idc: Indicates the level applied to the bitstream. The level is used within all profiles. In general, the level corresponds to a specific decoder processing load and memory capability.

sps_bounding_box_present_ flag: Indicates whether information about a bounding box is present in the SPS. sps_bounding_box_present_flag equal to 1 indicates information about the bounding box is present. sps_bounding_box_present_flag equal to 0 indicates that information about the bounding box is not defined.

When the value of sps_bounding_box_present_flag is 1, the following information about the bounding box is contained in the SPS.

sps_bounding_box_offset_x: Indicates the quantized x-axis offset of a source bounding box in the Cartesian coordinate system including the x-, y-, and z-axes.

sps_bounding_box_offset_y: Indicates the quantized y-axis offset of the source bounding box in the Cartesian coordinate system including the x-, y-, and z-axes.

sps_bounding_box_offset_z: Indicates the quantized z-axis offset of the source bounding box in the Cartesian coordinate system including the x-, y-, and z-axes.

sps_bounding_box_scale_factor: Indicates a scale factor used to indicate the size of the source bounding box.

sps_bounding_box_size_width: Indicates the width of the source bounding box in the Cartesian coordinate system including the x-, y-, and z-axes.

sps_bounding_box_size_height: Indicates the height of the source bounding box in the Cartesian coordinate system including the x-, y-, and z-axes.

sps_bounding_box_size_depth: Indicates the depth of the source bounding box in the Cartesian coordinate system including the x-, y-, and z-axes.

The SPS syntax according to embodiments further includes the following elements.

sps_source_scale factor: Indicates a scale factor of source point cloud data.

sps_seq_parameter_set_id: This is an identifier of the SPS for reference by other syntax elements (e.g., seq_parameter_set_id in the GPS).

sps_num_attribute_sets: Indicates the number of attributes encoded in the bitstream. The value of sps_num_attribute_sets is in the range of 0 to 63.

The following 'for' statement includes elements indicating information about each of the attributes as many as the number indicated by sps_num_attribute_sets. In the figure, i denotes each attribute (or attribute set). The value of i is greater than or equal to 0 and less than the number indicated by sps_num_attribute_sets.

attribute_dimension_minus1[ i ]: Indicates a value that is less than the number of components of the i-th attribute by 1. When the attribute is a color, the attribute corresponds to a three-dimensional signal representing the characteristics of light of a target point. For example, the attribute may be signaled by three components of RGB (Red, Green, Blue). The attribute may be signaled by three components of YUV, which are luma and two chromas. When the attribute is reflectance, the attribute corresponds to a one-dimensional signal representing the ratio of intensity of light reflectance of the target point.

attribute_instance_id[ i ]: Indicates the instant id of the i-th attribute. attribute_instance_id is used to distinguish the same attribute labels and attributes.

attribute_bitdepth_minus1[ i ]: Indicates a value that is less than the bit depth of the first component of the i-th attribute signal by 1. The value of this this element plus 1 specifies the bit depth of the first component.

attribute_cicp_colour_primaries[ i ]: Indicates chromaticity coordinates of the color attribute source primaries of the i-th attribute.

attribute_cicp_transfer_characteristics[ i ]: Indicates a reference opto-electronic transfer characteristic function of the color attribute as a function of the source input linear optical intensity Lc with a nominal real-valued range of 0 to 1, or indicates a reverse function of the reference opto-electronic transfer characteristic function of the color attribute as a function of the output linear optical intensity Lo with a nominal real-valued range of 0 to 1.

attribute_cicp_matrix_coeffs[ i ]: Indicates matrix coefficients used to derive luma and chroma signals from RBG or YXZ primary colors.

attribute_cicp_video_full_range_flag[ i ]: Indicates the black levels and range of luma and chroma signals derived from component signals having real values of E'Y, E'PB, and E'PR or E'R, E'G, and E'B.

known_attribute_label_flag[ i ], known_attribute_label[ i ], and attribute_label_fourbytes[ i ] are used together to identify the type of data transmitted in the i-th attribute. known_attribute_label_flag[ i ] indicates whether the attribute is identified by the value of known_attribute_label[ i ] or attribute_label_fourbytes[ i ], which is another object identifier.

As described above, the SPS syntax includes signaling information related to projection.

The projection_flag is the same as the projection_flag described with reference to FIG. 24. When the value of the projection_flag is 1, the SPS syntax further includes signaling information (projection_info()) related to the projection described with reference to FIG. 24. Since the signaling information related to projection is the same as that described with reference to FIG. 24, a detailed description thereof will be omitted.

sps_extension_flag: Indicates whether sps_extension_data_flag is present in the SPS. sps_extension_flag equal to 0 indicates that the sps_extension_data_flag syntax element is not present in the SPS syntax structure. The value of 1 of sps_extension_flag is reserved for future use. The decoder may ignore all sps_extension_data_flag syntax elements following sps_extension_flag set to 1.

sps_extension_data_flag: Indicates whether data for future use is present and may have any value.

The SPS syntax according to embodiments is not limited to the above example, and may further include additional elements or may exclude some of the elements shown in the figure for efficiency of signaling. Some of the elements may be signaled through signaling information (e.g., APS, attribute header, etc.) other than the SPS or through an attribute data unit.

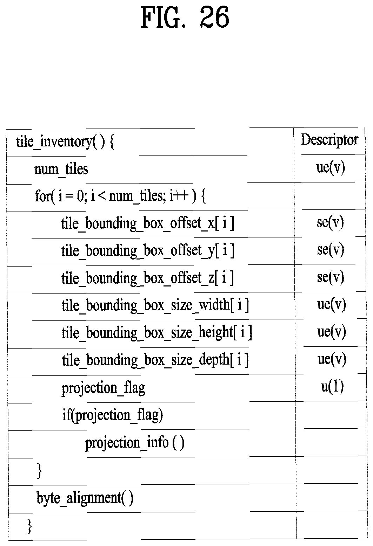

FIG. 26 shows an example of signaling information according to embodiments.

FIG. 26 shows a syntax structure of a tile inventory, and illustrates an example in which signaling information related to projection is included in the tile inventory at a tile level.

num_tiles: Indicates the number of tiles.

The following 'for' statement represents information about each tile. Here, i denotes each tile, and is greater than or equal to 0 and less than the number of tiles indicated by num_tiles.

tile_bounding_box_offset_x[ i ], tile_bounding_box_offset_y[ i ], and tile_bounding_box_offset_z[ i ]: Indicate the x-axis, y-axis, and z-axis offset values of the bounding box of tile i respectively.

tile_bounding_box_size_width[ i ], tile_bounding_box_size_height[ i ], and tile_bounding_box_size_depth[ i ]: Indicate the width, height, and depth of the bounding box of tile i, respectively.

The syntax of the tile inventory according to the embodiments includes signaling information related to projection.

The projection_flag is the same as the projection_flag described with reference to FIG. 24. When the value of the projection_flag is 1, the SPS syntax further includes signaling information (projection _info()) related to the projection described with reference to FIG. 24. Since the signaling information related to projection is the same as that described with reference to FIG. 24, a detailed description thereof will be omitted.

The syntax of the tile inventory according to embodiments is not limited to the above example, and may further include additional elements or may exclude some of the elements shown in the figure for efficiency of signaling. Some of the elements may be signaled through signaling information (e.g., SPS, APS, attribute header, etc.) other than the tile inventory or through an attribute data unit.

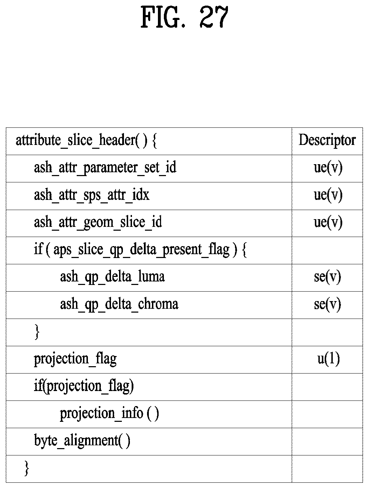

FIG. 27 shows an example of signaling information according to embodiments.

FIG. 27 shows a syntax structure of an attribute slice header, and illustrates an example in which signaling information related to projection is included in the attribute slice header at a slice level.

The syntax of the attribute header according to the embodiments includes the following syntax elements.

ash_attr_parameter_set_id: Has the same value as aps_attr_parameter_set_id of an active SPS.

ash_attr_sps_attr_idx: Specifies the order of attribute sets in the active SPS. ash_attr_geom_slice_id indicates the value of the slice ID (e.g., gsh_slice_id) included in the geometry header.

When the value of aps_slice_qp_delta_present_flag is 1, the syntax of the attribute slice header further includes elements given below. aps_slice_qp_delta_present_flag is information included in the attribute parameter set (APS) and indicates whether component QP offsets indicated by ash_attr_qp_offset are present in the header of the attribute data unit.

ash_qp_delta_luma: Indicates the luma value of the component QP.

ash_qp_delta_chroma: Indicates the chroma value of the component QP.

The syntax of the attribute slice header according to the embodiments includes signaling information related to projection. The projection_flag is the same as the projection_flag described with reference to FIG. 24. When the projection_flag value is 1, the SPS syntax further includes signaling information (projection _info()) related to the projection described with reference to FIG. 24. Since the signaling information related to projection is the same as that described with reference to FIG. 24, a detailed description thereof will be omitted.

The syntax of the attribute slice header according to embodiments is not limited to the above example, and may further include additional elements or may exclude some of the elements shown in the figure for efficiency of signaling. Some of the elements may be signaled through signaling information (e.g., SPS, APS, etc.) other than the attribute slice header or through an attribute data unit.

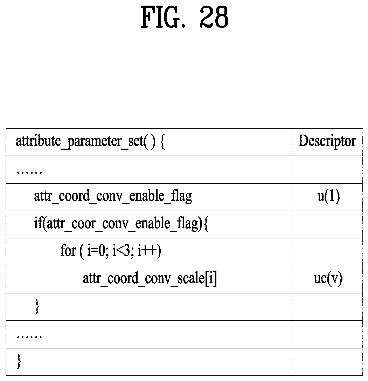

FIG. 28 is signaling information according to embodiments.

FIG. 28 shows a syntax structure of an APS, and illustrates an example in which signaling information related to projection is included in the APS of a sequence level.

attr_coord_conv_enable_flag: Indicates whether coordinate transformation (projection) is applied in attribute coding.

attr_coord_conv_enable_flag equal to 1 indicates that coordinate transformation is applied. attr_coord_conv_enable_flag equal to 0 indicates that coordinate transformation is not applied in attribute coding.

The following 'for' statement represents scale factor information for each attribute. Here, i denotes the x-axis, y-axis, and z-axis of the coordinate system. Thus, i has 0, 1, and 2 as values thereof.

attr_coord_conv_scale[i]: specifies the scale factor of the coordinate transformed axis in units of $2^{-8}$. scaleaxis[i] according to the embodiments is derived as follows.
ScaleAxis[0] = attr_coord_conv_scale[0]
ScaleAxis[1] = attr_coord_conv_scale[1]
ScaleAxis[2] = attr_coord_conv_scale[2]

Although not shown in the figure, the syntax of the APS may include coord_conv_scale_present_flag. coord_conv_scale_present_flag indicates whether the coordinate transformation scale factors scale_x, scale_y, and scale_z are present. When the value of coord_conv_scale_present_flag is 1, the scale factors are present. When the value of coord_conv_scale_present_flag is 0, no coordinate transformation scale factor is present. Scale factors according to embodiments (e.g., scale_x, scale_y, scale_z described above) may be minimum distances normalized by the maximum distances of the x-axis, y-axis, and z-axis.

The syntax of the APS according to embodiments is not limited to the above example, and may further include additional elements or may exclude some of the elements shown in the figure for efficiency of signaling. Some elements may be signaled through signaling information (e.g., SPS, attribute slice header, etc.) other than the APS or through an attribute data unit.

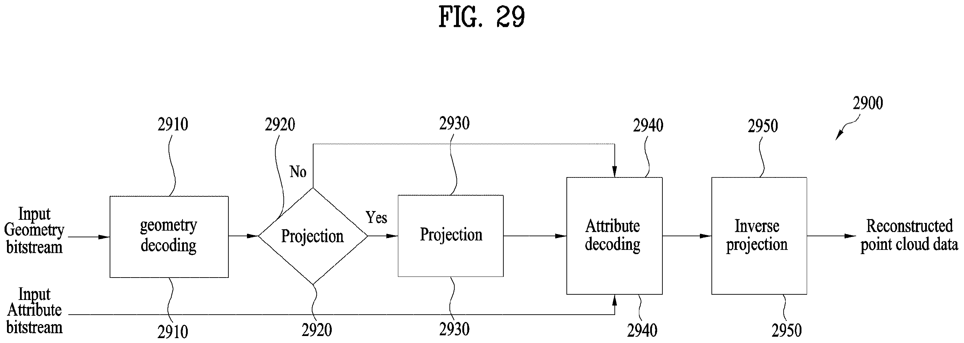

FIG. 29 is a flowchart illustrating an operation of a point cloud data reception device according to embodiments.

The flowchart 2900 of FIG. 29 illustrates example operations of a point cloud data reception device (or point cloud reception device) (e.g., the reception device 10004 of FIG. 1, the point cloud decoder of FIGS. 10 and 11, the reception device of FIG. 13) that processes point cloud data on which projection has been is performed. As described with reference to FIGS. 1 to 14, the point cloud reception device performs geometry decoding on the input geometry bitstream (2910). The geometry decoding according to the embodiments may include octree geometry decoding and trisoup geometry decoding, but is not limited thereto. The point cloud reception device performs at least one of the operations of the arithmetic decoder 13002, the occupancy code-based octree reconstruction processor 13003, the surface model processor (triangle reconstruction, up-sampling, voxelization) 13004, and the inverse quantization processor 13005 described with reference to FIG. 13. The point cloud reception device outputs the reconstructed geometry as a result of the geometry decoding.

The point cloud reception device determines whether to apply projection based on the signaling information described with reference to FIGS. 24 to 28. When the projection is applied, the point cloud reception device performs the projection on the decoded geometry (2930), and performs attribute decoding based on the projected geometry (2940). When the projection is not applied, the point cloud reception device performs attribute decoding based on the reconstructed geometry (2940). The attribute decoding 2940 according to the embodiments corresponds to at least one or a combination of the operations of the arithmetic decoder 13007, the inverse quantization processor 13008, the prediction/lifting/RAHT inverse transform processor 13009, and the color inverse transform processor 13010, but is not limited thereto. In addition, the attribute decoding 2940 according to the embodiments may include at least one or a combination of RAHT coding, predictive transform coding, and lifting transform coding. When the projection is performed, the point cloud reception device performs inverse projection (2950). Since the decoded attribute matches the projected geometry, the point cloud data of the geometry and the attribute which are matched in the projected coordinate system (or space) must be transformed back to the original coordinate system. Therefore, the point cloud reception device secures reconstructed point cloud data by performing inverse projection. When the projection has not been performed, the reverse projection 2950 is skipped. The projection 2930 according to the embodiments may be referred to as coordinate transformation pre-processing for attribute decoding. The inverse projection 2950 according to the embodiments may be referred to as coordinate transformation post-process for attribute decoding. The flowchart 2900 illustrates example operations of the point cloud reception device, and the operation sequence is not limited to this example. The operations represented by the elements of the flowchart 2900 according to the embodiments may be performed by hardware, software, and/or a process that constitutes the point cloud reception device, or a combination thereof.

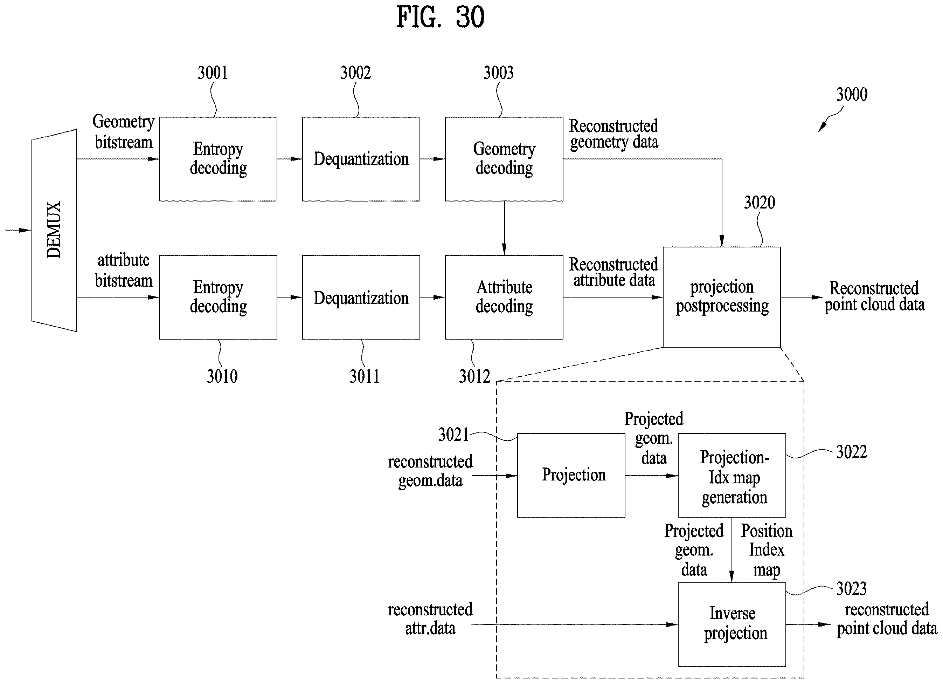

FIG. 30 illustrates an example of the operation of the point cloud reception device.

The flowchart 3000 of FIG. 30 specifically illustrates operations of the point cloud data reception device of the flowchart 2900 of FIG. 29. The flowchart 3000 illustrates example operations of the point cloud reception device. Therefore, the operation sequence of data processing of the point cloud reception device is not limited to this example. In addition, the operations represented by the elements of the flowchart 3000 according to the embodiments may be performed by hardware, software, and/or a process that constitutes the point cloud reception device, or a combination thereof.

The point cloud reception device outputs a geometry bitstream and an attribute bitstream by demultiplexing the bitstream. The point cloud reception device outputs the reconstructed geometry by performing entropy decoding 3001, dequantization 3002, and geometry decoding 3003 on the geometry bitstream. The entropy decoding 3001, dequantization 3002, and geometry decoding 3003 according to the embodiments may be referred to as geometry decoding or geometry processing, and corresponds to at least one or a combination of the operations of the arithmetic decoder 13002, the occupancy code-based octree reconstruction processor 13003, the surface model processor (triangle reconstruction, up-sampling, voxelization) 13004, and the inverse quantization processor 13005 described with reference to FIG. 13.

The point cloud reception device performs entropy decoding 3010, dequantization 3011, and attribute decoding 3012 on the attribute bitstream, and outputs a reconstructed attribute (or decoded attribute). The entropy decoding 3010, the dequantization 3011, and the attribute decoding 3012 according to the embodiments may be referred to as attribute decoding or attribute processing, and correspond to the attribute decoding 2940 described with reference to FIG. 29. In addition, the entropy decoding 3010, the dequantization 3011, and the attribute decoding 3012 according to the embodiments correspond to at least one or a combination of the operations of the arithmetic decoder 13007, the inverse quantization processor 13008, and the prediction/lifting/RAHT inverse transform processor 13009, and the color inverse transform processor 13010, but is not limited to the above example.

As described with reference to FIGS. 24 to 28, signaling information according to embodiments further includes signaling information (e.g., geo_projection_enable_flag, attr_projetion_enable_flag, attr_coord_conv_enable_flag, etc.) indicating whether projection is applied to each of the geometry and/or the attribute. Accordingly, the point cloud reception device according to the embodiments performs projection post processing on the reconstructed geometry and the reconstructed attribute based on the signaling information described with reference to FIGS. 24 to 28 (3020).

The projection post processing 3020 according to the embodiments corresponds to the projection preprocessing 1620 of the transmitting side described with reference to FIG. 16. The projection post processing 3020 according to the embodiments corresponds to the projection 2920 and the inverse projection 2950 described with reference to FIG. 29. The dashed box at the bottom of the figure shows a detailed operation flow of the projection post processing 3020. As shown in the figure, the point cloud reception device performs the projection post processing 3020 including projection 3021, projection index map generation 3022, and inverse projection 3023.

The point cloud reception device performs the projection on the reconstructed geometry (3021). The projection 3021 according to the embodiments corresponds to the reverse of the projection 1632 described with reference to FIG. 16. When the point cloud transmission device has performed the projection on the geometry, the reconstructed geometry indicates a position in the projection domain on the point cloud reception device. Therefore, the point cloud reception device performs reprojection of re-transforming the projected geometry into a 3D space based on the signaling information (e.g., the signaling information related to projection described with reference to FIGS. 24 to 28, coord_conversion_type, bounding_box_x_offset, etc.). The point cloud reception device may secure a range of reprojected data, scaling information (e.g., bounding_box_x/y/z_length, granurality_radius/angular/normal, etc.) from the signaling information related to projection described with reference to FIGS. 24 to 28.

The point cloud reception device according to the embodiments may check whether the laser position adjustment described with reference to FIG. 22 (the laser position adjustment 1642) has been performed at the transmitting side based on the signaling information (e.g., laser_position_adjustment_flag, etc.) related to the projection described with reference to FIGS. 24 to 28, and secure information related to the laser position adjustment. In addition, the point cloud reception device may check whether the sampling rate adjustment (e.g., the sampling rate adjustment 1643) has been performed at the transmitting side based on the signaling information (e.g., sampling_adjustment_cubic_flag, etc.) related to the projection described with reference to FIGS. 24 to 28, and secure related information. The point cloud reception device according to the embodiments may perform reprojection reflecting the laser position adjustment and the sampling rate adjustment. The projection, laser position adjustment, and sampling rate adjustment according to the embodiments are the same as those described with reference to FIGS. 21 to 23, and thus a detailed description thereof will be omitted.

The point cloud reception device may transform the coordinate system (e.g., the cylindrical coordinate system 1810 and the spherical coordinate system 1820 described with reference to FIG. 18) of the reprojected point cloud data (geometry) into the original coordinate system (e.g., the xyz coordinate system 1800) based on the signaling information (e.g., projection_type) related to the projection described with reference to FIGS. 24 to 28. As described above, the signaling information related to projection described with reference to FIGS. 24 to 28 includes an output range of the data in the original coordinate system (for example, orig_bounding_box_x_offset), and information related to the transformed coordinate system (for example, cylinder_center_x, etc.). The point cloud reception device may use the inverse transform equations for Equations 1 to 6. However, as described with reference to FIGS. 15 to 18, an error in the position of a point may occur while the point cloud transmission device performs voxelization (for example, the projection domain voxelization 1644) and rounding. Thus, even when the point cloud reception device performs projection based on the signaling information, it may be difficult to reconstruct the geometry without loss. That is, even when the attribute is losslessly reconstructed, an unintended error may occur because accurate matching between the geometry and the attribute fails due to loss of the reconstructed geometry. When projection is applied only in attribute coding, appropriate matching may be made by connecting the reconstructed geometry to the reconstructed attribute corresponding thereto even when the reconstructed attribute is not losslessly reconstructed. Accordingly, the reconstructed point cloud data with reduced errors may be secured.

Accordingly, the point cloud reception device according to the embodiments performs the projection index map generation 3022 to generate an index map indicating the index of the position information in order to connect the projected geometry to the position given before the projection is performed. The point cloud reception device organizes the points represented by the reconstructed geometry in a specific order (e.g., Morton code order, x-y-z zigzag order, etc.) with respect to the reconstructed geometry, and assigns indexes according to the order. The point cloud reception device may generate an index to a decoded position (geometry) map and a decoded position (geometry) to the index map based on the relationship between the position given before the projection and the index. The point cloud reception device performs projection on the geometry to which an index is assigned, and generates a decoded position to the projected position (geometry) map. In addition, the point cloud reception device generates the projection position to the index map based on the relationship between the decoded position and the index (e.g., the index to the generated decoded position (geometry) map and the decoded position (geometry) to the index map).

As described with reference to FIGS. 15 to 17, the point cloud transmission device performs attribute encoding based on the projected geometry. Accordingly, the reconstructed attribute is represented as an attribute for the geometry represented in the projection domain described with reference to FIGS. 15 to 23.

When attribute decoding is performed, each point in the projection domain has an attribute. Accordingly, the point cloud reception device performs the inverse projection 3023 may reconstruct the original geometry for the projected geometry based on the projected position to the index map and the index to the position map, and may match the reconstructed original geometry with the reconstructed attribute. The projection index map generation 3022 according to the embodiments may be included in the inverse projection 3023.

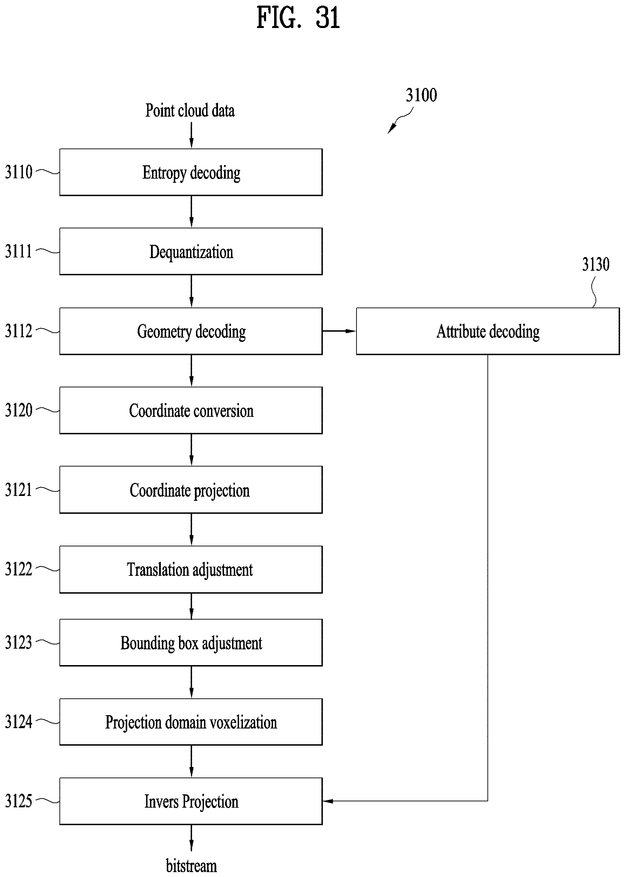

FIG. 31 illustrates an example of a processing procedure of the point cloud reception device.

The flowchart 3100 shown in the figure illustrates an example of the processing procedure of the point cloud reception device described with reference to FIGS. 29 to 30. The operation of the point cloud reception device is not limited to this example, and operations corresponding to the respective elements may be performed in the order shown in FIG. 31 or may not be performed sequentially.

As described with reference to FIGS. 29 to 30, the point cloud reception device receives a point cloud bitstream as an input and performs entropy decoding 3110, dequantization 3111, and geometry decoding 3112 on the geometry bitstream. The entropy decoding 3110, the dequantization 3111, and the geometry decoding 3112 according to the embodiments correspond to the geometry processing described with reference to FIG. 30, and a detailed description thereof will be omitted. As described with reference to FIG. 30, the point cloud reception device determines whether projection is performed based on the signaling information described with reference to FIGS. 24 to 28, and performs attribute decoding 3130 when the projection is not performed. When the projection is performed, the point cloud reception device performs projection post processing (e.g., the projection post processing 3020 described with reference to FIG. 30). The projection post processing according to the embodiments is an example of the projection post processing 3020 described with reference to FIG. 30, and includes coordinate transformation 3120, coordinate projection 3121, translation adjustment 3122, bounding box adjustment 3123, projection domain voxelization 3124, and inverse projection 3125. The coordinate transformation 3120, the coordinate projection 3121, the translation adjustment 3122, the bounding box adjustment 3123, and the projection domain voxelization 3124 may correspond to the projection 3021 described with reference to FIG. 30. As described with reference to FIG. 30, the point cloud reception device may perform the translation adjustment 3122, the bounding box adjustment 3123, and the like based on the information related to laser position adjustment (e.g., the laser position adjustment 1642), sampling rate adjustment (e.g., the sampling rate adjustment 1643), and the like included in the signaling information described with reference to FIGS. 24 to 28. The point cloud reception device performs inverse projection 3125. Since the inverse projection 3125 according to the embodiments is the same as the inverse projection 3023 described with reference to FIG. 30, a detailed description thereof will be omitted.

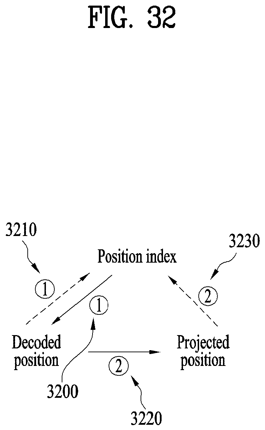

FIG. 32 illustrates an example of inverse projection.

FIG. 32 illustrates the projection index map generation 3022 as an example of the inverse projection described with reference to FIGS. 30 to 31. A solid line 3200 shown in the figure represents an operation of generating an index to a decoded position map based on the relationship between the position given before the projection and the index. A dotted line 3210 shown in the figure represents an operation of generating a decoded position to the index map. A solid line 3220 shown in the figure represents an operation of the point cloud reception device performing projection on the index assigned geometry and generating a decoded position to projected position map for the projected position (geometry) map. In addition, a dotted line 3230 shown in the figure represents an operation of the point cloud reception device generating a projection position to the index map based on the relationship between the decoded position and the index (e.g., the index to the decoded position (geometry) map and the decoded position (geometry) to the index map). The reverse projection is the same as that described with reference to FIG. 30, and thus a description thereof will be omitted.

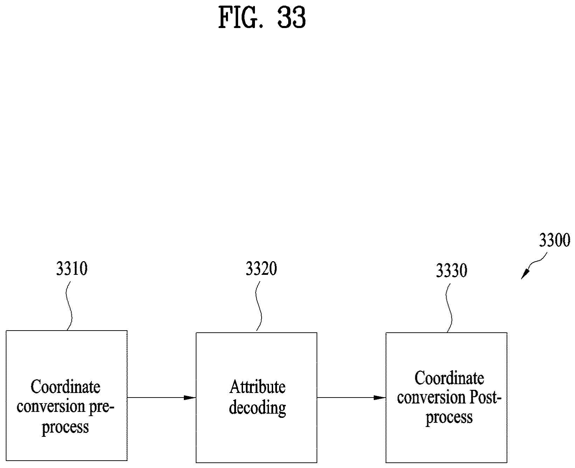

FIG. 33 illustrates an example of a processing procedure of the point cloud reception device according to embodiments.

The flowchart 3300 shown in the figure illustrates an example of the processing procedure of the point cloud reception device described with reference to FIGS. 29 to 31. The operation of the point cloud reception device is not limited to this example, and operations corresponding to the respective elements may be performed in the order shown in FIG. 33 or may not be performed sequentially.

As described with reference to FIGS. 29 to 30, when the value of attr_coord_conv_enabled_flag described with reference to FIG. 28 is 1, the point cloud reception device may perform coordinate transformation pre-process 3310 as pre-processing for attribute decoding. The coordinate transformation pre-process 3310 according to the embodiments may correspond to the projection 3021 described with reference to FIG. 30. The operations represented by the elements of the flowchart 3300 according to the embodiments may be performed by hardware, software, and/or a process that constitutes the point cloud reception device, or a combination thereof. The point cloud reception device performs the coordinate transformation pre-process 3310 based on the signaling information related to projection described with reference to FIGS. 24 to 28. The position (geometry) of a point output in the coordinate system transformation pre-process 3310 is used in the subsequent attribute decoding 3320. The input (or input data) of the coordinate transformation pre-process 3310 according to the embodiments is configured as follows. The input according to the embodiments includes variables that are secured from the signaling information related to projection described with reference to FIGS. 24 to 28 or derived based on the signaling information related to projection described with reference to FIGS. 24 to 28.

array PointPos: A variable specifying the point position represented in the Cartesian coordinate)
attr_coord_conv_enabled_flag (e.g., attr_coord_conv_enabled_flag described with reference to FIG. 28): an indicator specifying the use of coordinate conversion in the attribute coding process.
a variable number_lasers specifying the number of lasers
variables LaserAngle specifying the the tangent of the elevation angle of lasers
variables geomAngularOrigin specifying the ( x, y, z ) co-ordinate of the origin of lasers
variables ScaleAxis specifying the scale factors for coordinate transformation of each axis
variables LaserCorrection specifying the correction of the laser position relative to the geomAngularOrigin

The outputs of this process 3310 are the modified array PointPos and the PointPosCart that specifies the linkage between the positions before and after the coordinate transformation.

The coordinate transformation pre-process 3310 according to the embodiments may include a process to determine the laser index.

The process to determine the laser index laserIndex[ pointIdx ] with pointIdx in the range of 0 to PointCount-1 for a point that undergoes coordinate transformation is described as follows. This applies only when attr_coord_conv_enabled_flag is equal to 1.

Firstly, the estimate laserIndexEstimate[ pointIdx ] is computed by determining a node angle PointTheta as follow_)_s:

```
sPoint = (PointPos[pointIdx][0] - geomAngularOrigin[0]) << 8
    tPoint = (PointPos[pointIdx][1] - geomAngularOrigin[1]) << 8
    r2 = sPoint × sPoint + tPoint × tPoint
    rInvLaser = 1 ÷ Sqrt(r2)
    PointTheta = ((PointPos[pointIdx][2] - geomAngularOrigin[2]) × rInvLaser) >>
    14
```

and determining the closest laser angle LaserAngle[ laserIndexEstimate[ pointIdx ] ] to this point as follows:

```
start = 0
    end = number_lasers - 1
    for (int t = 0; t <= 4; t++) {
     mid = (start + end) >> 1
     if (LaserAngle[mid] > PointTheta)
      end = mid
     else
      start = mid
 }
    minDelta = Abs(LaserAngle[start] - PointTheta)
    laserIndex[pointIdx] = start
```

```
for (j = start + 1; j <= end; j++) {
 delta = Abs(LaserAngle[j] - PointTheta)
 if (delta < minDelta) {
 minDelta = delta
  laserIndex[pointIdx] = j
 }
}
```

The coordinate transformation pre-process 3310 according to the embodiments may include a coordinate transformation process.

In the beginning of the process, the position in the array of point position in the Cartesian coordinate is copied to the PointPosCart[ pointIdx ] with pointIdx in the range of 0 to PointCount-1 as follows:

PointPosCart[pointIdx][0] = PointPos[pointIdx][0]
PointPosCart[pointIdx][1] = PointPos[pointIdx] [1]
PointPosCart[pointIdx] [2] = PointPos[pointIdx] [2]

The following process applies to a point to convert the coordinate axis from the Cartesian coordinate to the cylindrical coordinate where ConvPointPos[ pointIdx ] specifies the point position in the transformed cylinderical coordinate with pointIdx in the range of 0 to PointCount-1.

ConvPointPos[pointIdx][0] = Sqrt(r2) >> 8;
ConvPointPos[pointIdx][1] = (atan2(tPoint, sPoint) + 3294199) >> 8;
ConvPointPos[pointIdx][2] = ((PointPos[pointIdx][2] - geomAngularOrigin[2] - LaserCorrection[laserIndex[pointIdx]]) $\times$ rInvLaser) >> 22;

The updated PointPos is specified by multiples of the scale factor on each axis. If the ScaleAxis is non-zero positive value, and the updated PointPos is derived as follows,

PointPos[pointIdx][0] = ((ConvPointPos[pointIdx][0] - MinPointPos[0]) $\times$ ScaleAxis[0]) >> 8
PointPos[pointIdx][1] = ((ConvPointPos[pointIdx][1] - MinPointPos[1]) $\times$ ScaleAxis[1]) >> 8
PointPos[pointIdx][2] = ((ConvPointPos[pointIdx][2] - MinPointPos[2]) $\times$ ScaleAxis[2]) >> 8,
where MinPointPos be the minimum point position of among ConvPointPos[pointIdx] with pointIdx that is in the range of 0 to PointCount-1.

If at least on of the elements of ScaleAxis is equal to zero, ScaleAxis is derived by the bound box. Let Max-PointPos be the maximum point position of the given ConvPointPos, the length of the bounding box along the axis LengthBbox may be defined as follows,

LengthBbox[0] = MaxPointPos[0] - MinPointPos[0]
LengthBbox[1] = MaxPointPos[1] - MinPointPos[1]
LengthBbox[2] = MaxPointPos[2] - MinPointPos[2]
and the maximum length among the three is defined
MaxLengthBbox = Max( LengthBbox[0], Max( LengthBbox[1],
LengthBbox[2] ) )
Then, the the ScaleAxis is derived as follows,
ScaleAxis[0] = MaxLengthBbox $\div$ LengthBbox[0]
ScaleAxis[1] = MaxLengthBbox $\div$ LengthBbox[1]
ScaleAxis[2] = MaxLengthBbox $\div$ LengthBbox[2]

As described with reference to FIGS. 29 to 30, the point cloud reception device performs attribute decoding 3320. Since the attribute decoding 3320 according to the embodiments is the same as the attribute decoding 2940 of FIG. 29, the attribute decoding or attribute processing described with reference to FIG. 30, a detailed description thereof will be omitted. The point cloud reception device performs attribute decoding and performs a coordinate transformation post process to match attributes using a point position in the Cartesian coordinate system (3330). The input (or input data) of the coordinate transformation post process 3330 according to the embodiments is configured as follows. The input according to the embodiments includes variables that are secured from the signaling information related to projection described with reference to FIGS. 24 to 28 or derived based on the signaling information related to projection described with reference to FIGS. 24 to 28.

> an indicator attr_coord_conv_enabled_flag specifying the use of coordinate conversion in the attribute coding process
>
> the array PointsAttr with elements PointsAttr[ pointIdx ][ cIdx ] with pointIdx in the range of 0 to PointCount - 1, and cIdx in the range of 0 to AttrDim - 1
>
> the array PointPosCart with elements PointPosCart[ pointIdx ] with pointIdx in the range of 0 to PointCount - 1

The output of this process 3300 is the array PointsAttr with elements PointsAttr[ pointIdx ][ cIdx ] where each element with index pointIdx of PointsAttr is associated with a position given by the array PointPosCart with the same index pointIdx.

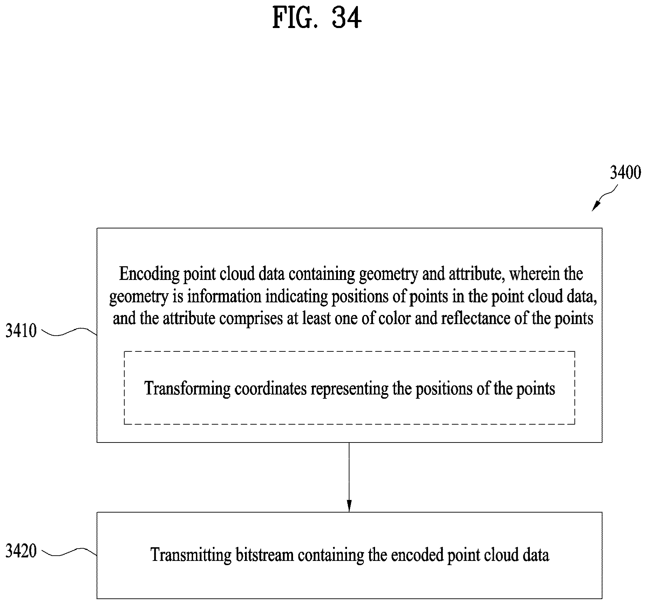

FIG. 34 is a flow diagram illustrating a method of transmitting point cloud data according to embodiments.

The flow diagram 3400 of FIG. 34 illustrates a method of transmitting point cloud data by the point cloud data transmission device (or point cloud transmission device) described with reference to FIGS. 1 to 33 (e.g., the transmission device or point cloud encoder described with reference to FIGS. 1, 12 and 14). The point cloud data transmission device encodes point cloud data containing geometry and an attribute (3410). The geometry is information indicating positions of points in the point cloud data, and the attribute includes at least one of color and reflectance of the points. The point cloud data transmission device encodes the geometry. As described with reference to FIGS. 1 to 33, the attribute encoding is dependent on the geometry encoding. The point cloud transmission device according to the embodiments may perform coordinate transformation (e.g., the projection described with reference to FIGS. 15 to 17) on the geometry and/or the attribute. Details of the projection are the same as those described with reference to FIGS. 15 to 33, and thus a description thereof will be omitted. When the point cloud data is acquired by one or more lasers, the point cloud transmission device may adjust the position of each laser based on the center position of a laser head outputting the one or more lasers and the position of each laser relative to the center position. The adjusted laser position may include a vertical angle represented in a coordinate system representing the positions of the points. Since the laser position adjustment is the same as that described with reference to FIGS. 15 to 22, a detailed description thereof will be omitted. A bitstream according to the embodiments contains the signaling information related to projection described with reference to FIGS. 24 to 28. For example, the bitstream contains information indicating whether the position of each laser has been adjusted (e.g., laser_position_adjustment_flag described with reference to FIG. 24), information indicating the number of the one or more lasers (e.g., num_laser described with reference to FIG. 24), and information related to laser adjustment. In addition, the bitstream contains information indicating whether coordinate transformation is applied to decode the encoded attribute (e.g., attr_coord_conv_enable_flag described with reference to FIG. 28) and information on scale factors of the transformed coordinate axes (e.g., attr_coord_conv_scale[i] described with reference to FIG. 28).

The point cloud reception device may secure such signaling information and perform projection and reverse projection, such as laser position readjustment and coordinate transformation. Since the operation of the point cloud data transmission device is the same as that described with reference to FIGS. 1 to 23, a detailed description thereof will be omitted.

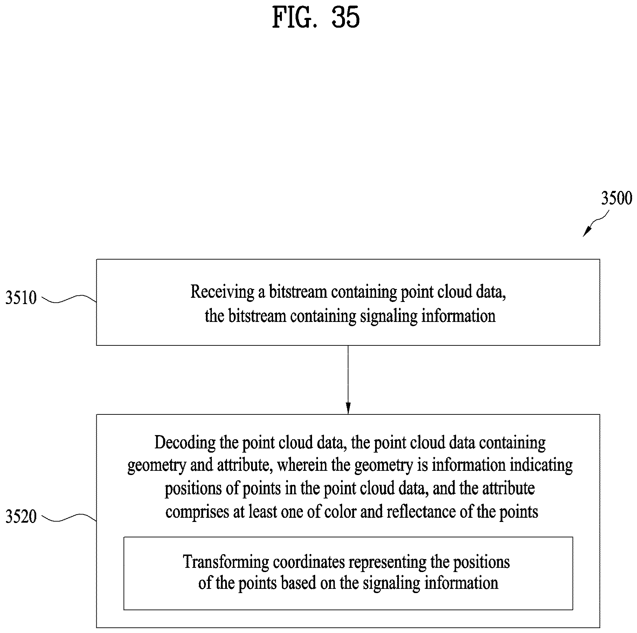

FIG. 35 is a flow diagram illustrating a method of processing point cloud data according to embodiments.

The flow diagram 3500 of FIG. 35 illustrates a method of processing point cloud data by the point cloud data reception device described with reference to FIGS. 1 to 33 (e.g., the reception device 10004 or the point cloud video decoder 10006).

The point cloud data reception device (e.g., the receiver of FIG. 1, the receiver of FIG. 13, etc.) receives a bitstream containing point cloud data (2510). The bitstream according to the embodiments contains signaling information (e.g., SPS, APS, attribute header, etc.) which is needed to decode the point cloud data. As described with reference to FIGS. 24 to 28, the point cloud transmission device according to the embodiments transmits signaling information related to projection (e.g., the projection of FIGS. 15 to 33) through the signaling information (e.g., SPS, APS, attribute header, etc.) contained in the bitstream. As described above, the signaling information (e.g., SPS, APS, attribute header, etc.) of the bitstream may contain projection related information at a sequence level or a slice level.

The point cloud data reception device (e.g., the decoder of FIG. 10) decodes the point cloud data based on the signaling information (2520). The point cloud data reception device (e.g., the geometry decoder of FIG. 10) decodes the geometry contained in the point cloud data. The point cloud data includes geometry and an attribute. The geometry is information indicating positions of points in the point cloud data, and the attribute includes at least one of color and reflectance of the points.

The point cloud reception device according to the embodiments may perform coordinate transformation (e.g., the coordinate transformation 3310, 3330 described with reference to FIGS. 15 to 33) on the geometry and/or the attribute. Details of the coordinate transformation are the same as those described with reference to FIGS. 15 to 33, and thus a description thereof will be omitted.

A bitstream according to the embodiments contains the signaling information related to projection described with reference to FIGS. 24 to 28. For example, the bitstream contains information indicating whether the position of each laser is adjusted (e.g., laser_position_adjustment_flag described with reference to FIG. 24), information indicating the number of one or more lasers (e.g., num_laser described with reference to FIG. 24), and information related to laser adjustment. In addition, the bitstream contains information indicating whether coordinate transformation is applied to decode the attribute (e.g., attr_coord_conv_enable_flag described with reference to FIG. 28) and information on scale factors of the transformed coordinate axes (e.g., attr_coord_conv_scale[i] described with reference to FIG. 28). The point cloud reception device may adjust the position of each laser based on information related to laser adjustment. The positions of lasers are positions adjusted based on the center position of the laser head outputting one or more lasers and a position of each laser relative to the center position, and include a vertical angle represented in a coordinate system representing the positions of the points. The point cloud data processing method is not limited to this example.

Cnfiguration element of an apparatus for processing point cloud data in accordance with some embodiments as explained FIG. 1 to FIG. 35 may be achieved byu a hardware, a software, a firmware, or a combination of thereof including one ore more processor connected to a memory. Configuration elements of a device in accordance with some embodiments may be achieved by a chip, for example, a hardware circuit. Also, elements of an apparatus for processing point cloud data may be achieved by each chip. Also, elements of an apparatus for processing point cloud data may be achieved by one or more processors executing one or more programs including instructions for performing one or more operations as explained in FIGS. 1 to FIG. 35.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described with reference to the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Mode for Invention

As described above, related contents have been described with reference to the best mode for carrying out the embodiments.

Industrial Applicability

It will be apparent to those skilled in the art that various changes or modifications can be made to the embodiments within the scope of the embodiments. Thus, it is intended that the embodiments cover the modifications and variations of this disclosure provided they come within the scope of the appended claims and their equivalents.

## Claims

1. A method of transmitting point cloud data, comprising:
   encoding point cloud data containing geometry and an attribute, wherein the geometry is information indicating positions of points in the point cloud data, and the attribute comprises at least one of a color and a reflectance of the points, the encoding of the point cloud data including:

   transforming coordinates representing the positions of the points; and
   transmitting a bitstream containing the encoded point cloud data.

2. The method of claim 1, wherein, based on the point cloud data being acquired by one or more lasers, the encoding of the point cloud data further comprises:
   adjusting position of each laser based on a center position of a laser head outputting the one or more lasers and a relative position of each laser to the center position, wherein the adjusted position of each laser includes a vertical angle represented in a coordinate system representing the positions of the points.

3. The method of claim 2, wherein the bitstream contains information indicating whether the position of each laser is adjusted and information indicating the number of the one or more lasers.

4. The method of claim 1, wherein the bitstream contains information indicating whether the coordinate transformation is applied to decode the encoded attribute and information on scale factors of transformed coordinate axes.

5. An apparatus of transmitting point cloud data, comprising:

   an encoder configured to encode point cloud data containing geometry and an attribute, wherein the geometry is information indicating positions of points in the point cloud data, and the attribute comprises at least one of a color and a reflectance of the points, wherein the encoder is further configured to transforms coordinates representing the positions of the points; and
   a transmitter configured to transmit a bitstream containing the encoded point cloud data.

6. The apparatus of claim 1, wherein the encoder, based on the point cloud data being acquired by one or more lasers, adjusts position of each laser based on a center position of a laser head outputting the one or more lasers and a relative position of each laser to the center position, wherein the adjusted position of each laser includes a vertical angle represented in a coordinate system representing the positions of the points.

7. The method of claim 6, wherein the bitstream contains information indicating whether the position of each laser is adjusted and information indicating the number of the one or more lasers.

8. The method of claim 6, wherein the bitstream contains information indicating whether the coordinate transformation is applied to decode the encoded attribute and information on scale factors of transformed coordinate axes.

9. A method of processing point cloud data, comprising:

   receiving a bitstream containing point cloud data, the bitstream containing signaling information; and
   decoding the point cloud data, the point cloud data containing geometry and an attribute,
   wherein the geometry is information indicating positions of points in the point cloud data, and the attribute comprises at least one of a color and a reflectance of the points, the decoding of the point cloud data including:
   transforming coordinates representing the positions of the points based on the signaling information.

10. The method of claim 9, wherein, the signaling information comprises information indicating whether position of each laser is adjusted and information indicating the number of one or more lasers that are used to aquire the point cloud data.

11. The method of claim 10, wherein the decoding of the point cloud data comprises:

    adjusting the position of each laser based on the information indicating whether the position of each laser is adjusted and the information indicating the number of the one or more lasers,
    wherein the position of each laser is a position adjusted based on a center position of a laser head outputting the one or more lasers and a relative position of each laser to the center position, the position including a vertical angle represented in a coordinate system representing the positions of the points.

12. The method of claim 9, wherein the signaling information comprises information indicating whether coordinate transformation representing the positions of the points is applied to decode the attribute and information on scale factors of transformed coordinate axes.

13. A device for processing point cloud data, comprising:

    a receiver configured to receive a bitstream containing point cloud data, the bitstream containing signaling information; and
    a decoder configured to decode the point cloud data,
    wherein the geometry is information indicating positions of points in the point cloud data, and the attribute comprises at least one of a color and a reflectance of the points,
    the decoder is further configured to transform coordinates representing the positions of the points based on the signaling information.

14. The device of claim 13, wherein, the signaling information comprises information indicating whether position of each laser is adjusted to adjust the coordinates representing the positions of the points, and information indicating the number of the one or more lasers.

15. The device of claim 14, wherein the decoder adjusts the position of each laser based on the information indicating whether the position of each laser is adjusted and the information indicating the number of the one or more lasers, wherein the position of each laser is a position adjusted based on a center position of a laser head outputting the one or more lasers and a relative position of each laser to the center position, the position including a vertical angle represented in a coordinate system representing the positions of the points.

16. The device of claim 13, wherein the signaling information comprises information indicating whether coordinate transformation representing the positions of the points is applied to decode the attribute and information on scale factors of transformed coordinate axes.

# FIG. 1

# FIG. 2

EP 4 124 041 A1

FIG. 3

# FIG. 4

positions                                    attributes

| | |
|---|---|
| 38000 — Transform coordinates | Transform colors — 38006 |
| 38001 — Quantize and remove points (voxelize) | Transfer attributes — 38007 |
| 38002 — Analyze octree | Reconstruct geometry |
| 38003 — Analyze surface approximation | RAHT    Gnnerate LOD — 38009 |
| 38005 — | Lifting — 40010 |
| 38004 — Arithmetic encode | Quantize coefficients — 40011 |
| | Arithmetic encode — 40012 |

38008

geometry bitstream                          atribute bitstream

# FIG. 5

# FIG. 6

# FIG. 7

$$1+2+4+8=15$$

FIG. 8

Level of details

# FIG. 9

# FIG. 10

geometry
bisteram

bisteram

geometry
decoder

decoded
geometry

decoded
point cloud

attribute
decoder

decoded
attribute

attribute
bisteram

# FIG. 11

geomerty
bitstream

attributes
birsrteam

11000 — Arithmerix decode

Arithmerix decode — 11005

11001 — Synthesize octree

Inverse quantize — 11006

11002 — synthesize surface approximation

11007

11003 — Reconstruct geometry

RAHT

Gnnerate LOD — 11008

Inverse lifring — 11009

11004 — Inverse transform coordinates

Inverse transform colors — 11010

position

attributes

# FIG. 12

# FIG. 13

13000 — Receiver

13001 — Reception processor

13006

Geometry bitstream

Attribute bitstream

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction /lifting/RAHT inverse transform processor — 13009

13005 — Inverse quantization processor

Color inverse transform processor — 13010

Sharing reconstructed position values

Renderer — 13011

# FIG. 14

Home Appliance — 1450

1460 — AI Server

1400

Smartphone — 1440

1470 — HMD

Network
(5G)

XR device — 1430

1410 — Robot

Selg-Driving
Vehicle

1420

# FIG. 15

**FIG. 16**

# FIG. 17

1700

Point cloud data

| | |
|---|---|
| 1710 | Geometry encoding |
| 1720 | Geometry decoding |
| 1725 | Recoloring |

geometry data

| | |
|---|---|
| 1730 | Coordinate conversion |
| 1731 | Coordinate projection |
| 1732 | Laser position adjustment |
| 1733 | Sampling rate adjustment |
| 1734 | Projection domain voxelization |
| 1740 | Attribute coding |
| 1745 | Entropy coding |

bitstream

# FIG. 18

1800

1810

$$P(r, \theta, z)$$

1811

$$r = \sqrt{x^2 + y^2}$$
$$\theta = tan^{-1}\left(\frac{y}{x}\right)$$
$$z = z$$

1812

$$x = r \cos\theta$$
$$y = r \sin\theta$$
$$z = z$$

1820

$$P = (\rho, \theta, \Phi)$$

1821

$$\rho = \sqrt{x^2 + y^2 + z^2}$$
$$\theta = tan^{-1}\left(\frac{y}{x}\right)$$
$$\emptyset = cos^{-1}\left(\frac{z}{\sqrt{x^2 + y^2 + z^2}}\right)$$

1822

$$x = \rho \sin\theta\emptyset \cos\theta$$
$$y = \rho \sin\theta\emptyset \sin\theta$$
$$z = \rho \cos\emptyset$$

EP 4 124 041 A1

FIG. 19

FIG. 20

2012

$x = r \cos \theta$
$y = r \sin \theta$
$z = r \tan \theta$

2011

$r = \sqrt{x^2 + y^2}$
$\theta = \tan^{-1}\left(\dfrac{y}{x}\right)$
$\phi = \tan^{-1}\left(\dfrac{\sqrt{x^2+y^2}}{z}\right)$

2010

$P(r, \theta, z)$

2022

$x = \rho \cos \theta \phi \cos \theta$
$y = \rho \cos \theta \phi \sin \theta$
$z = \rho \sin \phi$

2021

$\rho = \sqrt{x^2 + y^2 + z^2}$
$\theta = \tan^{-1}\left(\dfrac{y}{x}\right)$
$\phi = \sin^{-1}\left(\dfrac{\sqrt{x^2+y^2+z^2}}{z}\right)$

2020

$P = (\rho, \theta, \Phi)$

2000

# FIG. 21

2120

$(x\_min, y\_min, z\_min)$

$Y'$

$Z'$

$(0, 0, 0)$

$(x\_min, y\_min, z\_min)$

$X'$

2100

$P(r, \theta, z)$

$\Phi$

$z$

$r$

$\theta$

$Z$

$X$

$y$

Center

2110

$P = (\rho, \theta, \Phi)$

$\rho$

$\Phi$

$\theta$

$Z$

$X$

$y$

# FIG. 22

2200

laser relative position

head position

$Z_L$

$r_L$

LiDAR head

2210

Z'

laser relative position

$(x_L, y_L, z_L)$

head position
(0,0,0)

Y'

X'

$r_L = \sqrt{x_L^2 + x_L^2}$

FIG. 23

## FIG. 24

| | Descriptor |
|---|---|
| projection_info ( ) { | |
| projection_info_id | ue(v) |
| coord_conversion_type | u(4) |
| projection_type | u(4) |
| laser_position_adjustment_flag | u(1) |
| if(laser_position_adjustment_flag) { | |
| num_laser | u(8) |
| for( i=0; i<num_laser; i++) { | |
| z_laser[i] | ue(v) |
| z_laser[i] | ue(v) |
| theta_laser[i] | ue(v) |
| } | |
| } | |
| sampling_adjustment_cubic_flag | u(1) |
| sampling_adjustment_spread_bbox_flag | u(1) |
| sampling_adjustment_type | u(4) |
| geo_projection_enable_flag | u(1) |
| attr_projetion_enable_flag | u(1) |
| bounding_box_x_offset | ue(v) |
| bounding_box_y_offset | ue(v) |
| bounding_box_z_offset | ue(v) |
| bounding_box_x_length | ue(v) |
| bounding_box_y_length | ue(v) |
| orig_bounding_box_x_offset | ue(v) |
| orig_bounding_box_y_offset | ue(v) |
| orig_bounding_box_z_offset | ue(v) |
| rotation_yaw | ue(v) |
| rotation_pitch | ue(v) |
| rotation_roll | ue(v) |
| if (coord_conversion_type == 0 \|\| coord_conversion_type == 2) { | |
| cylinder_center_x | ue(v) |
| cylinder_center_y | ue(v) |
| cylinder_center_z | ue(v) |
| cylinder_radius_max | ue(v) |
| cylinder_degree_max | ue(v) |
| cylinder_z_max | ue(v) |
| ref_vector_x | ue(v) |
| ref_vector_y | ue(v) |
| ref_vector_z | ue(v) |
| normal_vector_x | ue(v) |
| normal_vector_y | ue(v) |
| normal_vector_z | ue(v) |
| clockwise_degree_flag | u(1) |
| granurality_radius | ue(v) |
| granurality_angular | ue(v) |
| granurality_normal | ue(v) |
| } | |
| else if (coord_conversion_type == 1 \|\| coord_conversion_type == 3) | |
| { | |
| cylinder_center_x | ue(v) |
| cylinder_center_y | ue(v) |
| cylinder_center_z | ue(v) |
| cylinder_radius_max1 | ue(v) |
| cylinder_radius_max2 | ue(v) |
| cylinder_degree_max1 | ue(v) |
| cylinder_degree_max2 | ue(v) |
| cylinder_z_max | ue(v) |
| ref_vector_x | ue(v) |
| ref_vector_y | ue(v) |
| ref_vector_z | ue(v) |
| normal_vector_x | u(1) |
| normal_vector_y | ue(v) |
| normal_vector_z | ue(v) |
| granurality_radius | ue(v) |
| granurality_angular | ue(v) |
| granurality_normal | ue(v) |
| } | |
| { | |

EP 4 124 041 A1

## FIG. 25

| seq_parameter_set( ) { | Descriptor |
|---|---|
| profile_compatibility_flags | u(24) |
| level_idc | u(8) |
| sps_bounding_box_present_flag | u(1) |
| if( sps_bounding_box_present_flag ) { | |
| sps_bounding_box_offset_x | se(v) |
| sps_bounding_box_offset_y | se(v) |
| sps_bounding_box_offset_z | se(v) |
| sps_bounding_box_scale_factor | ue(v) |
| sps_bounding_box_size_width | ue(v) |
| sps_bounding_box_size_height | ue(v) |
| sps_bounding_box_size_depth | ue(v) |
| } | |
| sps_source_scale_factor | u(32) |
| sps_seq_parameter_set_id | ue(v) |
| sps_num_attribute_sets | ue(v) |
| for( i = 0; i< sps_num_attribute_sets; i++ ) { | |
| attribute_dimension[ i ] | ue(v) |
| attribute_instance_id[ i ] | ue(v) |
| attribute_bitdepth[ i ] | ue(v) |
| attribute_cicp_colour_primaries[ i ] | ue(v) |
| attribute_cicp_transfer_characteristics[ i ] | ue(v) |
| attribute_cicp_matrix_coeffs[ i ] | ue(v) |
| attribute_cicp_video_full_range_flag[ i ] | u(1) |

| known_attribute_label_flag[ i ] | u(1) |
|---|---|
| if( known_attribute_label_flag[ i ] ) | |
| known_attribute_label[ i ] | ue(v) |
| else | |
| attribute_label_four_bytes[ i ] | u(32) |
| } | |
| projection_flag | u(1) |
| if(projection_flag) | |
| projection_info ( ) | |
| sps_extension_present_flag | u(1) |
| if( sps_extension_present_flag ) | |
| while( more_data_in_byte_stream( ) ) | |
| sps_extension_data_flag | u(1) |
| byte_alignment( ) | |
| } | |

EP 4 124 041 A1

# FIG. 26

| tile_inventory( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| tile_bounding_box_offset_z[ i ] | se(v) |
| tile_bounding_box_size_width[ i ] | ue(v) |
| tile_bounding_box_size_height[ i ] | ue(v) |
| tile_bounding_box_size_depth[ i ] | ue(v) |
| projection_flag | u(1) |
| if(projection_flag) | |
| projection_info ( ) | |
| } | |
| byte_alignment( ) | |
| } | |

# FIG. 27

| attribute_slice_header( ) { | Descriptor |
|---|---|
| ash_attr_parameter_set_id | ue(v) |
| ash_attr_sps_attr_idx | ue(v) |
| ash_attr_geom_slice_id | ue(v) |
| if ( aps_slice_qp_delta_present_flag ) { | |
| ash_qp_delta_luma | se(v) |
| ash_qp_delta_chroma | se(v) |
| } | |
| projection_flag | u(1) |
| if(projection_flag) | |
| projection_info ( ) | |
| byte_alignment( ) | |
| } | |

# FIG. 28

| attribute_parameter_set( ) { | Descriptor |
|---|---|
| ...... | |
| attr_coord_conv_enable_flag | u(1) |
| if(attr_coor_conv_enable_flag){ | |
| for ( i=0; i<3; i++) | |
| attr_coord_conv_scale[i] | ue(v) |
| } | |
| ...... | |
| } | |

FIG. 29

Input Geometry bitstream → geometry decoding (2910) → Projection? (2920) --No--> Attribute decoding (2940) → Inverse projection (2950) → Reconstructed point cloud data

Projection? (2920) --Yes--> Projection (2930) → Attribute decoding (2940)

Input Attribute bitstream → Attribute decoding (2940)

2900

## FIG. 30

# FIG. 31

3100

Point cloud data

3110 — Entropy decoding

3111 — Dequantization

3112 — Geometry decoding → 3130 Attribute decoding

3120 — Coordinate conversion

3121 — Coordinate projection

3122 — Translation adjustment

3123 — Bounding box adjustment

3124 — Projection domain voxelization

3125 — Invers Projection

bitstream

# FIG. 32

# FIG. 33

3300

3310 3320 3330

| Coordinate conversion pre-process | → | Attribute decoding | → | Coordinate conversion Post-process |

# FIG. 34

3400

3410

Encoding point cloud data containing geometry and attribute, wherein the geometry is information indicating positions of points in the point cloud data, and the attribute comprises at least one of color and reflectance of the points

Transforming coordinates representing the positions of the points

3420

Transmitting bitstream containing the encoded point cloud data

# FIG. 35

3500

3510 — Receiving a bitstream containing point cloud data,
the bitstream containing signaling information

3520 — Decoding the point cloud data, the point cloud data containing
geometry and attribute, wherein the geometry is information indicating
positions of points in the point cloud data, and the attribute
comprises at least one of color and reflectance of the points

Transforming coordinates representing the positions
of the points based on the signaling information

## INTERNATIONAL SEARCH REPORT

| International application No. |
| --- |
| **PCT/KR2021/003175** |

### A. CLASSIFICATION OF SUBJECT MATTER

**H04N 19/597**(2014.01)i; **H04N 19/70**(2014.01)i; **H04N 19/136**(2014.01)i; **H04N 19/60**(2014.01)i; **H04N 9/31**(2006.01)i

According to International Patent Classification (IPC) or to both national classification and IPC

### B. FIELDS SEARCHED

Minimum documentation searched (classification system followed by classification symbols)

H04N 19/597(2014.01); G01B 5/25(2006.01); G01C 19/00(2006.01); G06T 7/00(2006.01); G06T 7/254(2017.01); G06T 7/521(2017.01); H04N 5/232(2006.01); H04N 5/235(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 포지션(position), 좌표(coordinate), 변환(conversion), 레이저(laser), 헤드(head), 스케일 팩터(scale factor)

### C. DOCUMENTS CONSIDERED TO BE RELEVANT

| Category* | Citation of document, with indication, where appropriate, of the relevant passages | Relevant to claim No. |
| --- | --- | --- |
| X<br><br>A | MAMMOU, Khaled et al. G-PCC codec description v2. ISO/IEC JTC1/SC29/WG11 N18189. January 2019. [Retrieved on 03 June 2021]. Retrieved from <URL: https://mpeg.chiariglione.org/sites/default/files/files/standards/parts/docs/w18189.zip>.<br>See sections 2, 3.1-3.1.1 and 3.2.1; and figure 1. | 1,5,9,13<br><br>2-4,6-8,10-12,14-16 |
| A | KR 10-2019-0082065 A (BAIDU ONLINE NETWORK TECHNOLOGY (BEIJING) CO., LTD.) 09 July 2019 (2019-07-09)<br>See paragraphs [0014]-[0032]; claims 1-4; and figures 1-5. | 1-16 |
| A | KR 10-2017-0135914 A (TENYOUN 3D (TIANJIN) TECHNOLOGY CO., LTD.) 08 December 2017 (2017-12-08)<br>See paragraphs [0010]-[0023]; claim 1; and figure 2. | 1-16 |
| A | KR 10-2018-0117230 A (CYBEROPTICS CORPORATION) 26 October 2018 (2018-10-26)<br>See paragraphs [0022]-[0023]; claims 1-7; and figures 4-5. | 1-16 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 June 2021** | **28 June 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/003175**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2018-0035816 A (QUALCOMM INCORPORATED) 06 April 2018 (2018-04-06)<br>See paragraphs [0021]-[0022]; claims 1-2; and figure 1. | 1-16 |

Form PCT/ISA/210 (second sheet) (July 2019)

**INTERNATIONAL SEARCH REPORT**
Information on patent family members

International application No.

**PCT/KR2021/003175**

| Patent document cited in search report | | | Publication date (day/month/year) | Patent family member(s) | | | Publication date (day/month/year) |
|---|---|---|---|---|---|---|---|
| KR | 10-2019-0082065 | A | 09 July 2019 | CN | 108460791 | A | 28 August 2018 |
| | | | | EP | 3505962 | A1 | 03 July 2019 |
| | | | | JP | 2019-149150 | A | 05 September 2019 |
| | | | | US | 2019-0206063 | A1 | 04 July 2019 |
| KR | 10-2017-0135914 | A | 08 December 2017 | CN | 105222724 | A | 06 January 2016 |
| | | | | EP | 3348958 | A1 | 18 July 2018 |
| | | | | JP | 2018-516377 | A | 21 June 2018 |
| | | | | JP | 6550536 | B2 | 24 July 2019 |
| | | | | US | 10267627 | B2 | 23 April 2019 |
| | | | | US | 2018-0180408 | A1 | 28 June 2018 |
| | | | | WO | 2017-041419 | A1 | 16 March 2017 |
| KR | 10-2018-0117230 | A | 26 October 2018 | CN | 106796721 | A | 31 May 2017 |
| | | | | EP | 3194939 | A1 | 26 July 2017 |
| | | | | JP | 2017-530352 | A | 12 October 2017 |
| | | | | JP | 6457072 | B2 | 23 January 2019 |
| | | | | KR | 10-1940936 | B1 | 21 January 2019 |
| | | | | KR | 10-2017-0083028 | A | 17 July 2017 |
| | | | | US | 10346963 | B2 | 09 July 2019 |
| | | | | US | 2016-0078610 | A1 | 17 March 2016 |
| | | | | WO | 2016-040634 | A1 | 17 March 2016 |
| KR | 10-2018-0035816 | A | 06 April 2018 | BR | 112018002043 | A2 | 18 September 2018 |
| | | | | CN | 107836110 | A | 23 March 2018 |
| | | | | EP | 3329667 | A1 | 06 June 2018 |
| | | | | JP | 2018-522499 | A | 09 August 2018 |
| | | | | US | 10230888 | B2 | 12 March 2019 |
| | | | | US | 2017-0034432 | A1 | 02 February 2017 |
| | | | | WO | 2017-023415 | A1 | 09 February 2017 |

Form PCT/ISA/210 (patent family annex) (July 2019)